# EUROPÄISCHE PATENTSCHRIFT

(11) **EP 3 705 344 B1**
(45) Veröffentlichungstag und Bekanntmachung des Hinweises auf die Patenterteilung: **05.01.2022**
(21) Anmeldenummer: 20160798.3
(22) Anmeldetag: 03.03.2020
(51) Int. Cl.: B60L 50/64, B60L 53/302, H01M 10/48, H01M 10/625, H01M 10/654, H01M 10/6551, H01M 10/6556, H01M 10/656, H01M 10/6569, H01M 10/62, H01M 10/04, H01M 10/613, H01M 10/6557, H01M 10/6564, H01M 10/6567, B60T 1/10

(54) **AKKUMULATORZELLE ALS RÖHRENZELLE UND ALS WÄRMEÜBERTRAGER**
ACCUMULATOR CELL AS A CYLINDRICAL CELL AND AS A HEAT EXCHANGER
CELLULE D'ACCUMULATEUR EN TANT QUE CELLULE CYLINDRIQUE ET EN TANT QU'ÉCHANGEUR DE CHALEUR

(30) Priorität: 04.03.2019 DE 102019001520
(43) Veröffentlichungstag der Anmeldung: 09.09.2020
(73) Patentinhaber: Grimm, Friedrich, 70376 Stuttgart (DE)
(72) Erfinder: Grimm, Friedrich, 70376 Stuttgart (DE)
(74) Vertreter: Raible Deissler Lehmann Patentanwälte PartG mbB

(56) Entgegenhaltungen:
- DE-A1-102008 011 508
- DE-A1-102011 010 664
- DE-A1-102017 108 722
- JP-A- 2006 331 874

## Beschreibung

Die Erfindung betrifft eine Akkumulatorzelle als Röhrenzelle mit einer Oberflächenvergrößerung und mit einer Anbindung an eine Kanalstruktur für die thermische Konditionierung eines Moduls aus einer Mehrzahl von Röhrenzellen und einer Batterie aus einer Mehrzahl von Modulen für ein Elektrofahrzeug. Die Röhrenzelle hat eine Mittelachse und besteht aus einem röhrenförmigen Behälter für die Aufnahme eines mehrschichtigen inneren Aufbaus aus kathodenseitigen Elektroden mit Kathodenfolien und einer Kathodenbeschichtung und aus anodenseitigen Elektroden mit Anodenfolien und einer Anodenbeschichtung und aus einem zwischen den Elektroden angeordneten mikroporösen Separator, der ausschließlich für bestimmte Metallionen durchlässig ist, sowie aus einer Isolierung zwischen den Elektroden untereinander und zwischen den Elektroden und dem röhrenförmigen Behälter.

Insbesondere betrifft der mehrschichtige innere Aufbau einer Röhrenzelle bekannte elektrochemische Materialien für eine Lithium-Ionen-Zelle, die auf Seiten der Kathode aus LiCoO₂, LiMnO₂, LiFePO₄ oder aus Li₂FePO₄F und auf Seiten der Anode aus Kohlenstoff-Graphit bestehen. Für den mehrschichtigen inneren Aufbau der Röhrenzelle können in Zukunft auch elektrochemische Materialien in Frage kommen, die Gegenstand der Forschung sind, wobei die Bauform der Röhrenzelle auch für eine Lithium-Schwefel-Zelle, eine Lithium-Luft-Zelle, eine Lithium-Polymer-Zelle als eine Feststoff-Zelle, eine Magnesium-Zelle oder eine Zelle, bei der beide Elektroden aus Kohlenstoff bestehen geeignet erscheint. Der röhrenförmige Behälter weist bevorzugt ein von einem Wärmeträgerfluid durchströmtes, koaxial zu der Mittelachse angeordnetes Rohrstück auf und ist als ein Wärmeübertrager mit einer Wärmesenke oder mit einer Wärmequelle der Kanalstruktur derart verbunden ist, dass die Röhrenzelle Wärme sowohl an ihrer Innenseite als auch an ihrer Außenseite auf ein in der Kanalstruktur strömendes Wärmeträgerfluid und umgekehrt übertragen kann und die Übertragung von Wärme mit einer trockenen oder einer nassen Anbindung der Röhrenzelle an die Kanalstruktur erfolgt. Die Übertragung ist über eine Außenschale und eine Innenschale möglich. Eine Röhrenzelle ist die kleinste Einheit einer aus mindestens einem Modul aufgebauten Batterie für ein Elektrogerät oder für ein Elektrowerkzeug und insbesondere auch für die Batterie eines Elektrofahrzeugs einschließlich eines stationären Batteriespeichers für den Ladebetrieb des Elektrofahrzeugs. Die Oberflächenvergrößerung betrifft sowohl den röhrenförmigen Behälter als auch den mehrschichtigen inneren Aufbau der Röhrenzelle und ermöglicht eine vermehrte Übertragung von Wärme auf das Wärmeträgerfluid, sodass mit einer größeren Anzahl von thermisch konditionierbaren Wicklungen des inneren Aufbaus oder mit einer größeren Anzahl von thermisch konditionierbaren Schichten eines Stapels des inneren Aufbaus eine Vergrößerung der elektrochemisch aktiven Oberfläche der Elektroden einhergeht und die elektrische Kapazität der Akkumulatorzelle unabhängig von dem jeweiligen Kathodenmaterial vergrößert wird. Die Kanalstruktur für ein Wärmeträgerfluid dient der Verbindung jeder einzelnen Röhrenzelle eines Moduls oder einer aus mehreren Modulen aufgebauten Batterie mit einer Wärmequelle oder mit einer Wärmesenke der Kanalstruktur. Der mehrschichtige innere Aufbau weist eine von einer Mikrostruktur gebildete Oberflächenvergrößerung auf, die von Rippen und Rillen als linienförmige Strukturelemente oder von Näpfchen oder Noppen als punktförmige Strukturelemente an den Kathoden- und an den Anodenfolien gebildet werden kann und dazu ausgebildet ist die elektrochemisch aktive Kontaktfläche zu der Kathodenbeschichtung an der kathodenseitigen Elektrode und zu der Anodenbeschichtung an der anodenseitigen Elektrode zu erweitern, sodass das elektrochemische Fassungsvermögen der Röhrenzelle vergrößert wird. Das Elektrofahrzeug selbst kann ein ausschließlich elektrisch angetriebenes Fahrzeug ebenso wie ein Fahrzeug mit Hybridantrieb, einen Lkw, einen Bus, ein Fahrrad und auch ein Wasser-, Luft- oder Raumfahrzeug jeweils mit einem Elektroantrieb betreffen. Eine Batterie, die aus einer Mehrzahl von Modulen und aus einer Vielzahl von Röhrenzellen aufgebaut ist, ermöglicht die wechselseitige Übertragung großer Energieinhalte mit einer Kraft-Wärme-Kälte-Kopplung zwischen einem Elektrofahrzeug und einer stationären Batterie und ermöglicht damit eine Sektorkopplung für eine effiziente Bewirtschaftung regenerativer Energiequellen.

### Stand der Technik

Eine Akkumulatorzelle, im Folgenden kurz als Zelle bezeichnet, stellt als eine in sich funktionsfähige Einheit den kleinsten wiederaufladbaren elektrochemischen Energiespeicher eines aus einer Mehrzahl von Zellen aufgebauten Moduls und einer aus einer Mehrzahl von Modulen aufgebauten Batterie dar, wobei die einzelnen Zellen mittels von Zellverbindern untereinander in Reihe oder parallel verschaltet werden. Aufgrund ihrer hohen Energiedichte werden gegenwärtig Lithium-Ionen-Zellen als Sekundärzellen einer wiederaufladbaren Batterie genutzt. Die Kathode einer Lithium-Ionen-Zelle besteht z.B. aus einer Vielzahl von Aluminiumfolien jeweils mit einer Schicht aus Lithium-Metalloxid, während die Anode aus einer Vielzahl von Kupferfolien jeweils mit einer Schicht aus Kohlenstoff-Graphit besteht und die beiden Elektroden durch einen von einer mikroporösen Membran gebildeten Separator, der ausschließlich für positiv geladene Lithium-Ionen durchlässig ist, voneinander geschieden sind. Bei einer aufgeladenen Akkumulatorzelle sind die Lithium-Ionen in Form einer sog. Interkalationsverbindung in der Anodenbeschichtung eingelagert. Beim Entladen der Zelle setzt die Interkalationsverbindung Elektronen frei, die über einen externen Stromkreis von der Anode über einen Verbraucher zur Kathode fließen. Gleichzeitig wandern die Lithium-Ionen von der Anode durch den Separator zur Kathode. Beim Wiederaufladen der Zelle durchqueren die Lithium-Ionen den Separator in entgegengesetzter Richtung von der Kathode zur Anode. Bei der Leistungsabgabe einer aufgeladenen Zelle lösen sich an der Kathode in einer elektrochemischen Reduktion die Lithium-Ionen aus dem Metalloxid und nutzen einen wasserfreien Elektrolyt als Transportmedium, um sich in einem Oxidationsprozess an der Anode in eine Schichtstruktur aus Graphit einzulagern. Beim Wiederaufladen der Zelle läuft der lonenstrom in umgekehrter Richtung ab, wobei die Reduktion an der Anode und die Oxidation an der Kathode stattfindet, sodass beim Wiederaufladen die Vorzeichen der Elektroden vertauscht sind und die Anode die positive und die Kathode die negative Elektrode der Zelle darstellt. Mit dem Begriff Lithium-Ionen-Zelle sind unterschiedliche Kathodenmaterialien beschrieben, die aus LiCoO₂, LiMnO₂, LiFePO₄ oder Li₂FePO₄F bestehen können und sich jeweils durch eine unterschiedliche Energiedichte in einem Bereich zwischen 70 und 190 Wh/kg auszeichnen. Bei Lithium-Schwefel-Röhrenzellen (LiCoO₂/C-System) ist die Energiedichte um den Faktor 2-3 größer als bei der genannten LiCoO₂-Zelle. Vielversprechend scheint auch eine aus organischen Materialien aufgebaute Zelle (Dual Carbon Battery) zu sein. Eine weitere Steigerung der Energiedichte ist theoretisch mit einer Lithium-Luft-Zelle möglich und wird mit 11 kWh/kg angegeben. Dabei besteht die Kathode aus einem porösen Trägersubstrat und einem porösen Aktivmaterial, wobei Sauerstoff aus einer Sauerstoff-Atmosphäre der Zelle durch das Trägersubstrat in das Aktivmaterial diffundiert. Der besondere Vorzug einer Feststoffzelle (Solid State Battery) besteht darin, dass eine derartige Zelle ohne einen flüssigen Elektrolyt auskommt. Sowohl die Energieabgabe beim Entladen der Batterie im Fahrbetrieb eines Elektrofahrzeugs als auch die Energieaufnahme im Ladebetrieb des Elekrofahrzeugs ist mit einer unerwünschten Wärmeentwicklung und einer damit einhergehenden, unerwünschten thermisch und elektrochemisch bedingten Dilatation der einzelnen Zellen der Batterie verbunden. Diese regelmäßig eintretende Volumenänderung führt im Lauf der Zeit zu einer Zerrüttung der Nanostrukturen im Inneren der Zellen, die mit einem Leistungsabbau der Zelle verbunden ist. Um an einer Batterie möglichst viele Be- und Entladezyklen ohne mittel- und langfristige Leistungseinbußen zu realisieren, ist deshalb ein Temperiersystem, das die Temperaturen in allen Betriebszuständen der Batterie innerhalb eines Temperaturkorridors von 20°C bis maximal 40°C gewährleistet, vorteilhaft. Gelingt dies, kann allein dadurch die Nutzungsperiode einer Batterie erheblich verlängert werden, was im Sinne einer ressourcenschonenden und energiesparenden Produktion sehr wünschenswert ist. Die Batterie eines Elektrofahrzeugs stellt bereits heute eine elektrische Antriebsleistung von 400-500 kW zur Verfügung. Besonders kritische Temperaturbedingungen innerhalb einer Batterie treten z.B. beim Wiederaufladen der Batterie nach einer leistungsintensiven Autobahnfahrt auf. Die Batterie kommt hier bereits mit einer erhöhten Temperatur an die Ladestation, wo der Schnellladevorgang die Temperatur zusätzlich erhöht. Bekannt sind Kühlvorrichtungen, die die Batterie vom Boden und/oder von oben her kühlen. Die damit verbundene einseitige Wärmeübertragung führt zu einer inhomogenen Temperaturverteilung innerhalb der einzelnen Zellen und wirkt sich damit negativ auf deren Lebensdauer aus. Mit einem Gewicht von 500-700 kg stellt die Batterie eine thermisch nur bedingt zu konditionierende kompakte Masse dar. Bei bekannten Temperiersystemen sind z.B. plattenförmige Wärmeübertrager, die von einem Gemisch aus Wasser und Glykol als Wärmeträgerfluid durchströmt werden, mit der von den Akkumulatorzellen gebildeten Wärmequelle verbunden, während die Wärmesenke z.B. von einem luftdurchströmten Kühler gebildet wird. Eine wesentlich wirksamere Wärmesenke stellt ein separater Kältekreis dar, der eine von dem Wärmeträgerfluid unabhängige Wärmesenke bildet. Der mit der Elektrifizierung des Straßenverkehrs verbundene technologische Umbruch bietet die Chance, eine Vielzahl von Elektrofahrzeugen als mobile Energiespeicher zu nutzen, um "Flautephasen" bei der Gewinnung von Sonnen- und Windenergie zu überbrücken. Diese sog. Sektorkopplung stellt einerseits neue Anforderungen an eine Datenerfassung bzgl. der Anzahl der zur Verfügung stehenden Elektrofahrzeuge und des jeweiligen Ladezustands ihrer Batterie, andererseits ist dafür eine Infrastruktur erforderlich, die die schnelle Übertragung großer Energieinhalte von einem Elektrofahrzeug in eine öffentliche Netzstruktur und umgekehrt ermöglicht. (Vgl. Ochs, Dirk 2017: Traktionsbatterien - Schlüssel für die Elektromobilität, in Erfinderaktivitäten 2016/2017, DPMA, München S. 4-9)

Aus der DE 10 2008 011 508 A1 geht eine als Energiespeicher bezeichnete Röhrenzelle hervor, bei der der elektrochemisch wirksame innere Aufbau pauschal als aktives Substrat und als Speichermedium bezeichnet wird. Der Energiespeicher besitzt einen Wärmeabführkanal mit oberflächenvergrößernden Wärmeleitstrukturen, die von Rippen, Schuppen, Noppen und/oder Wellenstrukturen gebildet sind. Eine Oberflächenvergrößerung des elektrochemisch wirksamen inneren Aufbaus in Form einer Mikrostruktur geht aus dieser Druckschrift nicht hervor.

Aus der DE 10 2017 108 722 A1 geht eine effektiv gekühlte Batterieanordnung hervor, bei der sich eine Kühlvorrichtung zumindest teilweise durch die Batteriezelle erstreckt und mit einem Kühlmittelverteiler verbunden ist. Die Druckschrift bezieht sich sowohl auf zylinderförmige Röhrenzellen als auch auf Pouchzellen, jeweils mit einem zentralen Kühlmittelverteiler.

Aus der DE 10 2014 100 420 A1 geht eine Akkumulator- bzw. Batteriezelle mit einem integrierten Wärmerohr hervor, das eine passive Temperaturregelung der Akkuzelle durch einen zweiphasigen Wärmetransport ermöglicht. Eine Röhrenzelle geht aus dieser Druckschrift nicht hervor.

Aus der JP 2006 - 331 874 A geht ein wellenförmiges oder trapezförmiges Batterieelement hervor, das so geformt werden kann, dass zwischen den einzelnen Batteriezellen Ventilationskanäle gebildet werden, die zur Kühlung eines Moduls aus mehreren Batteriezellen von Luft durchströmt werden können.

Aus der US 7 682 732 B2 geht ein Batteriemodul hervor, das aus einer Mehrzahl einzelner, durch eine Trennrippe voneinander beabstandeter Batteriezellen aufgebaut ist. Die ein- oder zweilagig ausgebildete Trennrippe, weist eine Mehrzahl von Vorsprüngen oder Einbuchtungen auf um einen von Luft durchströmbaren Hohlraum zwischen den einzelnen Batteriezellen herzustellen. Die Trennrippen haben keinen Einfluss auf den elektrochemischen inneren Aufbau der Batteriezellen.

Aus der US 2015/0 141 371 A1 geht ein Stapel bogenförmig ausgebildeter Batteriezellen hervor, die in einem versiegelten Batteriebehälter angeordnet sind. Zwischen den einzelnen, als Federelemente wirkenden Batteriezellen ist ein Spalt vorgesehen, der es ermöglicht, einen Stapel der Zellen innerhalb des Behälters vorzuspannen.

Aus der DE 10 2015 208 821 A1 geht eine Lithium-Ionen-Batteriezelle mit einem Druckausgleichselement aus einem elastischen Material hervor.

### Aufgabenstellung

Ausgehend von dem dargestellten Stand der Technik besteht die Aufgabe der Erfindung darin, unter Berücksichtigung des Zusammenhangs zwischen der elektrischen Leistung und der Wärmeübertragungsleistung eine neue Akkumulatorzelle bereitzustellen. Die als Röhrenzelle ausgebildete Akkumulatorzelle ist für den Aufbau eines Moduls aus einer Mehrzahl von Röhrenzellen sowie für den Aufbau einer Batterie für ein Fahrzeug aus einer Mehrzahl von Modulen geeignet.

Diese Aufgabe wird durch den Gegenstand des Anspruchs 1 gelöst. Weitere vorteilhafte Ausführungsformen gehen aus den Unteransprüchen hervor.

Im Einzelnen können sich folgende Vorteile und Eigenschaften ergeben:
- Angabe einer Röhrenzelle, deren innerer Aufbau mindestens einen Stapel mit einer Vielzahl von senkrecht zu der Mittelachse ausgerichteten Schichten hat und der Wärmetransport parallel zu den Elektrodenschichten des inneren Aufbaus erfolgt.
- Angabe einer wasser- und luftdichten Verbindung zwischen zwei benachbarten Röhrenzellen mit einem Dichtungsring
- Vergrößerung der Oberfläche des inneren Aufbaus durch mikrostrukturierte Oberflächen an den Elektroden
- Verlängerung der Lebensdauer einer Röhrenzelle mit einem Thermomanagement, das in allen Betriebszuständen der Röhrenzelle eine Betriebstemperatur von 20°C bis 40°C einhält.
- Erhöhung der elektrischen Kapazität einer Röhrenzelle und eines Moduls, Einheit (Ah)
- Angabe eines schnell wiederaufladbaren Moduls als ein zusammenhängender Quer- oder Längskanal der Kanalstruktur
- Erhöhung des Gesamtenergiegehalts der Batterie eines Elektrofahrzeugs als Produkt aus Kapazität und Spannung, Einheit (Wh)
- Erhöhung des Ladewirkungsgrads und der Zyklenfestigkeit für mehr als 10000 Lade- und Entladezyklen der Batterie
- Leichtbau einer Batterie mit einem gasförmigen Wärmeträgerfluid
- Angabe eines explosionsgeschützten Temperiersystems mit einem Inertgas als Wärmeträgerfluid
- Angabe eines elektropneumatischen Fahrsystems durch die Integration von Druckluftspeichern in die Längs- und Querträger der Karosserie eines Elektrofahrzeugs
- Angabe eines Radnabenkompressors zur Wiederaufladung der Druckluftspeicher im Bremsbetrieb des Fahrzeugs
- Angabe einer geschlossenen Kanalstruktur für ein Thermoöl oder für ein Inertgas und für Wasser mit einem Frostschutzmittel
- Angabe einer offenen Kanalstruktur für Luft und Druckluft als Wärmeträgerfluid
- Angabe einer Anschlussvorrichtung der Kanalstruktur des Elektrofahrzeugs an ein externes Kanalnetz
- Angabe einer Kraft-Wärme-Kälte-Kopplung für ein Elektrofahrzeug an einer Hochvolt-Schnellladestation

Eine Akkumulatorzelle ist als eine Röhrenzelle mit einer Oberflächenvergrößerung und mit einer Anbindung an eine Kanalstruktur für die thermische Konditionierung eines Moduls aus einer Mehrzahl von Röhrenzellen und einer Batterie aus einer Mehrzahl von Modulen ausgebildet, insbesondere für ein Elektrofahrzeug. Die Röhrenzelle hat einen röhrenförmigen Behälter mit einer Mittelachse für die Aufnahme eines mehrschichtigen inneren Aufbaus aus kathodenseitigen Elektroden mit Kathodenfolien und einer Kathodenbeschichtung und aus anodenseitigen Elektroden mit Anodenfolien und einer Anodenbeschichtung und aus einem zwischen den Elektroden angeordneten ausschließlich für bestimmte Metallionen durchlässigen Separator sowie aus einer Isolierung zwischen den Elektroden untereinander und zwischen den Elektroden und dem röhrenförmigen Behälter. Mikrostrukturierte Oberflächen erweitern an den Kathoden- und/oder an den Anodenfolien die elektrochemisch aktive Kontaktfläche zu einer Kathodenbeschichtung an der kathodenseitigen Elektrode und/oder zu einer Anodenbeschichtung an der anodenseitigen Elektrode. Hierdurch können mehr Ionen eingelagert werden. Rippen und Rillen als linienförmige Strukturelemente und Näpfchen oder Noppen als punktförmige Strukturelemente für die Ausbildung einer Mikrostruktur an der Oberfläche der Kathoden- und der Anodenfolien erweitern die Oberfläche, sodass das elektrochemische Fassungsvermögen der Röhrenzelle vergrößert wird. Die maximale Ladungsmenge (Amperestunden) der Röhrenzelle wird als elektrische Kapazität bezeichnet und wirkt sich als Produkt aus der Kapazität und Spannung auch auf den Gesamtenergiegehalt (Wattstunden) der Röhrenzelle aus. Die Röhrenzelle zeichnet sich deshalb unabhängig von dem jeweils gewählten Kathoden- und Anodenmaterial durch eine vergleichsweise höhere Energiedichte als dem Verhältnis von Energie und Volumen aus, wobei das Volumen der Kanalstruktur nicht berücksichtigt ist. Der röhrenförmige Behälter bildet ein einzelnes modulares Rohrstück der Kanalstruktur. Eine Mehrzahl derartiger Rohrstücke ist jeweils mit einem Dichtungsring gegeneinander abgedichtet und bildet einen Teilabschnitt der Kanalstruktur, sodass Wärme von dem inneren Aufbau direkt auf das in dem Rohrstück strömende Wärmeträgerfluid übertragen werden kann. Die Oberflächenvergrößerung der Röhrenzelle hat thermische und elektochemische Wirkungen, die sich gegenseitig bedingen. Unter thermischen Aspekten betrachtet hat der röhrenförmige Behälter z.B. als Hohlzylinder eine größere Oberfläche als ein Zylinder und kann allein schon deswegen mehr Wärme übertragen. Dabei wird die Oberflächenvergrößerung von einer Außenschale, einer Innenschale, einem ringförmigen Deckel und einem ringförmigen Boden des röhrenförmigen Behälters bewirkt. Zusätzlich kann die Wärmeübertragungsleistung der Röhrenzelle entweder mittels eines zweischaligen Mehrkammerprofils, oder mittels von Rippen, oder Sicken jeweils an der Außenschale und/oder an der Innenschale des röhrenförmigen Behälters weiter erhöht werden. Bevorzugt steht für die Übertragung von Wärme auf ein Wärmeträgerfluid eine um den Faktor 1,2 bis 1,8 vergrößerte äußere Oberfläche des röhrenförmigen Behälters zur Verfügung. Es sind auch höhere Faktoren möglich, beispielsweise 2,5. Dabei bilden das Mehrkammerprofil und die Rippen oder die Sicken an der Außenschale und/oder an der Innenschale des röhrenförmigen Behälters eine Kanalstruktur zwischen einander benachbarten Röhrenzellen. Noppen oder Pyramidenstümpfe als regelmäßig ausgeprägte Vor- und Rücksprünge an der Außenschale und an der Innenschale des röhrenförmigen Behälters bilden entsprechend eine in zwei Richtungen durchströmbare Kanalstruktur. Die elektrochemische Wirkung der Oberflächenvergrößerung einer Röhrenzelle betrifft zusätzliche Schichten des inneren Aufbaus, die aufgrund der erhöhten Wärmeübertragungsleistung des röhrenförmigen Behälters möglich sind, sodass mittels der zusätzlichen Schichten des inneren Aufbaus die elektrische Kapazität der Röhrenzelle erhöht werden kann. Der Querschnitt des röhrenförmigen Behälters weist bevorzugt entweder einen Hohlzylinder oder eine Röhre mit einem dreieckigen, quadratischen, hexagonalen oder rechteckigen Querschnitt auf. Dabei kann der Querschnitt der Innenschale analog zu dem jeweiligen Querschnitt der Außenschale oder kreisrund ausgebildet werden. Das in dem von der Röhrenzelle gebildeten Rohrstück strömende Wärmeträgerfluid grenzt entweder unmittelbar an die Innenschale des röhrenförmigen Behälters oder strömt innerhalb eines mit der Innenschale verbundenen Wärmeträgerrohrs oder innerhalb eines Wärmerohrs. Nimmt die Röhrenzelle einen Wärmeübertrager auf, besteht eine wärmeleitende Verbindung zwischen der Innenschale des Behälters und dem Wärmeübertrager, sodass mit einem Wärmeträgerrohr eine nasse Anbindung und mit einem Wärmerohr eine trockene Anbindung an die Kanalstruktur ausgebildet werden kann. Das Wärmeträgerrohr ist entweder als ein Sternrohr oder als ein Rohr mit integriertem Vor- und Rücklauf für das Wärmeträgerfluid ausgebildet. Im Falle eines mit einem Unterdruck beaufschlagten Wärmerohrs überträgt das Wärmeträgerfluid Wärme latent zwischen der von der Röhrenzelle gebildeten Wärmequelle und der von der Kanalstruktur gebildeten Wärmesenke und wechselt dabei regelmäßig seine Phase, sodass eine Entkoppelung von Wärmequelle und Wärmesenke mit einer trockenen Anbindung an die Kanalstruktur ermöglicht wird. Das Wärmerohr kann in einer horizontalen, geneigten oder vertikalen Stellung mit der Röhrenzelle verbunden werden, wobei das Wärmerohr in einer geneigten oder vertikalen Stellung mit Vorteil als ein Zweiphasen-Thermosiphon arbeitet. Die Mehrfach-Röhrenzelle wird als ein röhrenförmiges Modul für den Aufbau einer Batterie verwendet. In einer besonders vorteilhaften Ausführungsvariante der Erfindung sind die einzelnen Schichten des inneren Aufbaus als planebene Flächen senkrecht zu der Mittelachse der Röhrenzelle ausgerichtet und bilden einen Stapel, der aus einer Vielzahl von Kathodenfolien mit einer Kathodenbeschichtung und aus einer Vielzahl von Anodenfolien mit einer Anodenbeschichtung sowie aus einem zwischen den Elektroden angeordneten, ausschließlich für bestimmte Metallionen durchlässigen Separator aufgebaut ist, wobei zwischen dem röhrenförmigen Behälter und dem inneren Aufbau und zwischen den Elektroden untereinander eine Isolierung vorgesehen ist. Der Stapel weist einen zentralen Durchbruch für die Aufnahme eines als Wärmeträgerrohr oder als Wärmerohr ausgebildeten Wärmeübertragers auf, der jeweils die Innenschale des röhrenförmigen Behälters ersetzen kann. In den Behälter eingebaut, bildet ein einzelner Stapel eine Einfach-Röhrenzelle, während mehrere Stapel in einem Behälter eine Mehrfach-Röhrenzelle bilden und als ein röhrenförmiges Modul für den Aufbau einer Batterie geeignet sind. Die Batterie eines Elektrofahrzeugs besteht aus einer Mehrzahl von Modulen, die jeweils aus einer Mehrzahl von Röhrenzellen aufgebaut und innerhalb eines Batteriegehäuses angeordnet sind. Das Batteriegehäuse ist zweischalig ausgebildet, wobei die Innenseite der Innenschale die äußere Begrenzung der Kanalstruktur bildet und zwischen der den Röhrenzellen zugewandten Innenschale und einer der Atmosphäre zugewandten Außenschale ein mit einem Vakuum beaufschlagter Druckraum gebildet wird, der eine Wärmedämmung aus pyrogener Kieselsäure aufnimmt, um die Wärmeverluste der Batterie zu minimieren, sodass unter allen Betriebsbedingungen eine Temperatur von min. 20°C bis max. 40°C in der von dem Batteriegehäuse gebildeten Klimakammer gehalten werden kann. Innerhalb des Batteriegehäuses wird jede einzelne Röhrenzelle und jedes Modul der Batterie mittels von einem Wärmeträgerfluid thermisch konditioniert, das als Wasser mit einem Frostschutzmittel oder als Thermoöl oder als Schutzgas in einer in sich geschlossenen Kanalstruktur zirkuliert oder als Luft und Druckluft eine offene Kanalstruktur durchströmt. Die thermische Konditionierung der Batterie kann auch in separaten Kanalstrukturen jeweils für ein flüssiges und ein gasförmiges Wärmeträgerfluid erfolgen. Ein wärmeleitendes und elektrisch isolierendes Thermoöl ermöglicht die Direktanströmung der Röhrenzelle sowohl an der Außenschale als auch an der Innenschale. Das von der Innenschale gebildete Rohrstück und die Kammern eines Mehrkammerprofils, das die Außenschale des röhrenförmigen Behälters der Röhrenzelle bildet, können dabei als Vorlauf oder als Rücklauf für das Thermoöl genutzt werden. Der Kreislauf des Thermoöls wird von einer Umwälzpumpe angetriebenen und führt über eine Wärmesenke an der Frontpartie des Fahrzeugs, die von einem fahrtwinddurchströmten Kühler oder von einem separaten Kältekreis mit einem Kältemittel gebildet wird. Ein Inertgas als Wärmeträgerfluid zeichnet sich wie das Thermoöl durch den Vorteil aus, dass bei einem Unfall gefährliche exotherme Oxidationsprozesse in der Batterie weitgehend ausgeschlossen werden können. Das Inertgas wird in einem in sich geschlossenen Kreislauf mittels einer Umwälzpumpe über mindestens eine Eingangsöffnung in das Batteriegehäuse eingeleitet und durch mindestens eine Ausgangsöffnung aus dem Batteriegehäuse abgesaugt und an einer Wärmesenke der Kanalstruktur gekühlt. Als Wärmesenke dient dabei, wie auch bei dem Thermoöl, ein mit der Frontpartie der Karosserie verbundener, fahrtwinddurchströmter Kühler oder ein separater Kältekreis. Inertgas ermöglicht an der Batterie eine Gewichtseinsparung um bis zu 20%. Die von den Röhrenzellen gebildete Kanalstruktur stellt deshalb auch eine Leichtbautechnik dar, die eine vorgegebene elektrische Leistung mit weniger Masse erreicht. Besteht das Wärmeträgerfluid aus Druckluft, ist die Kanalstruktur des Elektrofahrzeugs mit Druckluftspeichern verbunden, die im Bereich der Fahrgastzelle in die Längs- und Querträger und in A-, B-, und C-Säulen der Karosserie integriert werden können. Die Druckluft wird an einer Eingangsöffnung des Batteriegehäuses entspannt, um die Module unter Nutzung des Joule-Thomson-Effekts zu kühlen, wobei die Druckluft an einer Ausgangsöffnung des Batteriegehäuses von einem Gebläse angesaugt und einem Mischluftsystem zugeführt wird, um die Fahrgastzelle zu temperieren. Im Fahrbetrieb des Elektrofahrzeugs ist ein bordeigener Kompressor vorgesehen, der als ein Radnabenkompressor ausgebildet sein kann, und als Energiekonverter dazu ausgebildet ist Druckluft zu erzeugen, sodass die beim Bremsen gewonnene Energie als Druckluft in den Druckluftspeichern des Elektrofahrzeugs gespeichert werden kann. Bis zu einem Druck von 15 bar können die Längs- und Querträger des Fahrgestells als Druckluftspeicher dienen, wobei eine Ventilinsel die Steuerungseinheit eines elektropneumatischen Fahrsystems bildet. Mit der aus einer Vielzahl von Röhrenzellen gebildeten Kanalstruktur für ein Elektrofahrzeug ist es möglich wechselseitig große Energieinhalte zwischen einer Schnellladestation und einem Elektrofahrzeug zu übertragen. Dabei ist sowohl die Schnellladestation als auch das Elektrofahrzeug jeweils mit einer Batterie, einem Druckluftspeicher und einem Kompressor ausgerüstet. Durch Entspannung der an der Schnellladestation gespeicherten Druckluft werden im Schnellladebetrieb sowohl die Batterie des Elektrofahrzeugs als auch die stationäre Batterie gekühlt. Im Fahrbetrieb wird die Batterie durch Entspannung der in den fahrzeugseitigen Druckluftspeichern gespeicherten Druckluft gekühlt, wobei ein Kompressor im Bremsbetrieb des Fahrzeugs kinetische Energie zurückgewinnt, indem die fahrzeugseitigen Druckluftspeicher wieder aufgefüllt werden. Die bei der Kompression der Luft anfallende Wärme wird für die thermische Konditionierung der Fahrgastzelle des Elektrofahrzeugs und im stationären Fall für die Temperierung eines Gebäudes genutzt. Das elektropneumatische Fahrsystem arbeitet ohne Flüssigkeiten und ist deshalb besonders sicher und weitgehend wartungsfrei. Für die Herstellung einer Sektorkopplung zwischen einem Elektrofahrzeug und einer Schnellladestation hat das Elektrofahrzeug eine lösbare Anschlussvorrichtung für eine temporäre Kraft-Wärme-Kälte-Kopplung zwischen der Kanalstruktur des Elektrofahrzeugs und einer externen Kanalstruktur der Schnellladestation, sodass das Elektrofahrzeug im Schnellladebetrieb für die Übertragung von Wärme an eine externe Wärmequelle oder Wärmesenke angeschlossen wird, um sowohl die Batterie des Elektrofahrzeugs als auch eine stationäre Batterie der Schnellladestation thermisch zu konditionieren, wobei die Anschlussvorrichtung eine lösbare Klick-Rast-Verbindung für eine trockene oder eine nasse Anbindung an die externe Kanalstruktur aufweist, die mit einem Hochvolt-Elektroanschluss kombinierbar ist. Dabei ermöglicht die Röhrenzelle als Element einer Kanalstruktur zur thermischen Konditionierung der Batterie des Elektrofahrzeugs und der Batterie der Schnellladestation eine effiziente Sektorkopplung für die Bereitstellung von Energie aus regenerativen Quellen.

Weitere Einzelheiten und vorteilhafte Weiterbildungen der Erfindung ergeben sich aus den im Folgenden beschriebenen und in den Zeichnungen dargestellten, in keiner Weise als Einschränkung der Erfindung zu verstehenden Ausführungsbeispielen sowie aus den Unteransprüchen. Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Die Darstellung der Anzahl und Dicke der einzelnen Schichten des inneren Aufbaus einer Röhrenzelle in den Figuren ist im Sinne einer besseren Lesbarkeit jeweils als ein nicht maßstäbliches Schema zu verstehen.

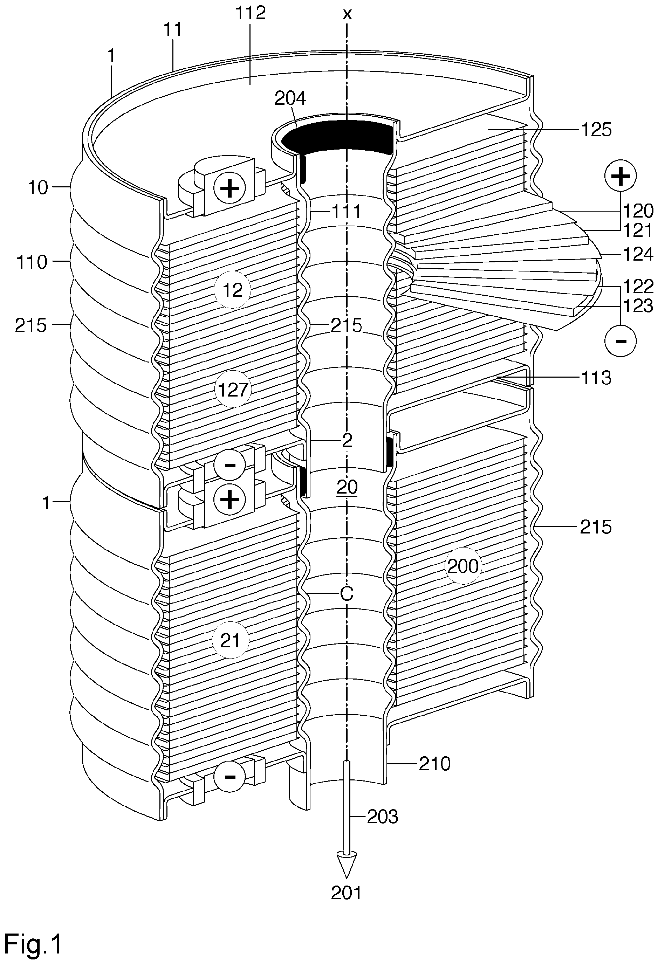

Es zeigen:
Fig. 1 die Reihenschaltung von zwei Röhrenzellen mit einer Kanalstruktur in einer isometrischen Schnittdarstellung
Fig. 2 ein von 16 Röhrenzellen gebildetes Modul in der isometrischen Ausschnittdarstellung
Fig. 3 zwei Röhrenzellen des Moduls nach Fig. 2 in einem Querschnitt durch die Kanalstruktur
Fig. 4 ein von hexagonalen Röhrenzellen gebildetes Modul mit einer Kanalstruktur in der isometrischen Übersicht und mit Darstellung der trockenen Anbindung an die Kanalstruktur im Querschnitt
Fig. 5 eine Röhrenzelle mit einem röhrenförmigen Behälter und einer Oberflächenvergrößerung des inneren Aufbaus in einer isometrischen Ausschnittdarstellung
Fig. 6 den Aufbau einer Röhrenzelle mit einem röhrenförmigen Behälter im schematischen Querschnitt
Fig. 7 die Reihenschaltung von zwei Röhrenzellen nach Fig. 6 mit einer Kanalstruktur im schematischen Querschnitt
Fig. 8 die Reihenschaltung von zwei Röhrenzellen mit einem Wärmeträgerrohr im schematischen Querschnitt
Fig. 9 eine Röhrenzelle, deren Innenschale von der Außenschale eines Wärmerohrs gebildet wird, im schematischen Querschnitt
Fig. 10 eine Röhrenzelle mit einer Oberflächenvergrößerung des röhrenförmigen Behälters und des inneren Aufbaus im schematischen Querschnitt
Fig. 11 ein Notebook und ein Modul mit einer Kanalstruktur in der isometrischen Übersicht und in einem isometrischen Ausschnitt
Fig. 12 ein Elektrofahrzeug mit einer Kanalstruktur für eine Druckluftkühlung der Batterie als Funktionsschema im schematischen Grundriss, in der perspektivischen Übersicht und in einer Ausschnittperspektive
Fig. 13 ein Elektrofahrzeug mit einer Kanalstruktur für eine kombinierte Druckluft- und Wasserkühlung der Batterie als Funktionsschema im schematischen Grundriss und als Ausschnittisometrie der Batterie
Fig. 14 ein Elektrofahrzeug mit einer in sich geschlossenen Kanalstruktur für eine Direktanströmung der einzelnen Röhrenzellen der Batterie in einem schematischen Grundriss als Funktionsschema und in einer isometrischen Ausschnittdarstellung des Elektrofahrzeugs
Fig. 15 die Batterie eines Elektrofahrzeugs in der isometrischen Ausschnittdarstellung und eine Röhrenzelle mit einem von einem Stapel gebildeten inneren Aufbau im schematischen Querschnitt
Fig. 16 die Batterie eines Elektrofahrzeugs in der isometrischen Ausschnittdarstellung und eine Röhrenzelle mit einem von einem Wickel gebildeten inneren Aufbau im schematischen Querschnitt
Fig. 17 ein Elektrofahrzeug im Ladebetrieb mit einer Anschlussvorrichtung an eine externe Kanalstruktur in der perspektivischen Übersichtsdarstellung
Ausführliche Figurenbeschreibung
Fig. 1 zeigt zwei Röhrenzellen 1 mit einer Kanalstruktur 2. Der röhrenförmige Behälter 11 für einen mehrschichtigen inneren Aufbau 12 hat eine kathodenseitige Elektrode (+) und eine anodenseitige Elektrode (-) und besteht aus einer Außenschale 110, einer Innenschale 111, einem Ringdeckel 112 und einem Ringboden 113 und ist als ein Wärmeübertrager 21 ausgebildet, bei dem die Außenschale 110 und die Innenschale 111 jeweils eine Oberflächenvergrößerung in Form von ringförmigen Sicken 215 aufweisen. Die Innenschale 111 bildet ein Rohrstück C für eine Kanalstruktur 2 und weist einen Dichtungsring 204 für die Herstellung einer wasser- und gasdichten Verbindung mit der innerhalb der Kanalstruktur 2 jeweils anschließenden Röhrenzelle 1 auf. Die einzelnen Schichten des mehrschichtigen inneren Aufbaus 12 bestehen auf Seiten der kathodenseitigen Elektroden (+) aus einer Vielzahl von Kathodenfolien 120 mit einer doppelseitigen Kathodenbeschichtung 121 und auf Seiten der anodenseitigen Elektroden (-) aus einer Vielzahl von Anodenfolien 122 jeweils mit einer doppelseitigen Anodenbeschichtung 123, und aus einem Separator 124 jeweils zwischen den Elektroden (+,-) untereinander sowie aus einer Isolierung 125 zwischen den Elektroden (+,-) und dem röhrenförmigen Behälter 11. Die kathodenseitigen Elektroden (+) werden an einem gegenüber dem Ringdeckel 112 isolierten Zellpol zusammengeführt, während die anodenseitigen Elektroden (-) der Röhrenzelle 1 in einem Zellpol des Ringbodens 113 vereinigt sind. Im Falle der hier dargestellten Lithium-Ionen-Röhrenzelle 1 hat die von einer Aluminiumfolie gebildete Kathodenfolie 120 eine Dicke von 0,02 mm und die aus Lithium-Metalloxid bestehende, doppelseitige Kathodenbeschichtung 121 eine Dicke von 0,08 mm, während die von einer Kupferfolie gebildete Anodenfolie 122 eine Dicke von nur 0,01 mm und die aus Kohlenstoff-Graphit bestehende doppelseitige Anodenbeschichtung 123 eine Dicke von 0,09 mm hat. Der röhrenförmige Behälter 11 der Lithium-Ionen-Röhrenzelle 1 ist mit einem wasserfreien Elektrolyt für Lithium-Ionen gefüllt, wobei der Separator 124 zwischen den Elektroden (+,-) eine Dicke von 0,02 mm hat und ausschließlich für Lithium-Ionen durchlässig ist. Die Schichten des mehrschichtigen inneren Aufbaus 12 sind jeweils senkrecht zu der Mittelachse x ausgerichtet und weisen einen zentralen Durchbruch 128 für das von der Innenschale 111 gebildete Rohrstück C auf.

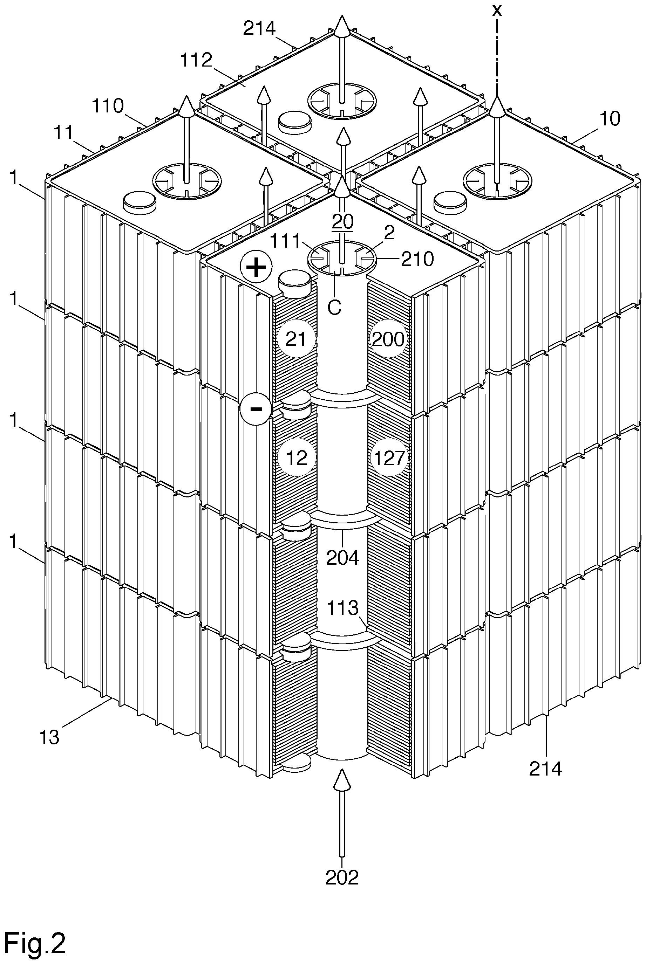

Fig. 2 zeigt ein Modul 10 aus 16 einzelnen Röhrenzellen 1, die untereinander zu einer Kanalstruktur 2 verbunden sind. Der mehrschichtige innere Aufbau 12 einer Röhrenzelle 1 weist einen Stapel 127 auf, dessen einzelne Schichten einen zentralen

Durchbruch 128 für die Aufnahme eines Wärmeträgerrohrs 210 haben. Der röhrenförmigen Behälter 11 hat eine Außenschale 110 und eine Innenschale 111, die jeweils von einem stranggepressten Aluminiumprofil gebildet werden, sowie einen Ringdeckel 112 und einen Ringboden 113. Das von der Innenschale 111 gebildete Wärmeträgerrohr 210 weist ein Sternrohr auf. Dichtungsringe 204 stellen eine gas- und wasserdichte Verbindung zwischen den einzelnen Rohrstücken C der innenseitigen Kanalstruktur 2 des Moduls 10 her, während an der Außenschale 110 ein AluminiumStrangpressprofil eine Vielzahl voneinander beabstandeter Rippen 214 aufweist und jeweils mit den Außenschalen 110 der benachbarten Röhrenzellen 1 eine außenseitige Kanalstruktur 2 für das Modul 10 bildet. Die von dem Wärmeträgerfluid 20 durchströmte Kanalstruktur 2 verbindet die von den Röhrenzellen 1 gebildete Wärmequelle 200 mit einer externen Wärmesenke 201, die im Falle von Druckluft als Wärmeträgerfluid 20 von einem Druckluftspeicher gebildet wird. Eine aus derartigen Modulen 10 aufgebaute Batterie 13 kann als stationärer Batteriespeicher für den Schnellladebetrieb von Elektrofahrzeugen genutzt werden.

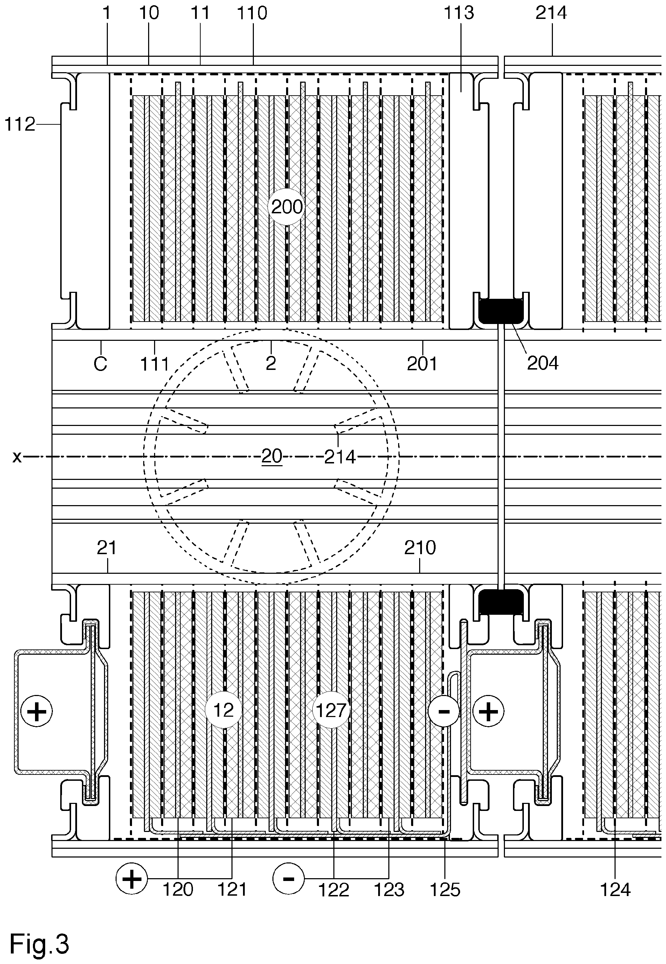

Fig. 3 zeigt zwei Röhrenzellen 1 nach Fig. 2 in einen schematischen Detailschnitt. Der Schnitt entlang der Mittelachse x zeigt den Aufbau einer Röhrenzelle 1, deren röhrenförmiger Behälter 11 eine berippte Außenschale 110, eine von einem Sternrohr gebildete Innenschale 111 sowie einen Ringdeckel 112 mit dem kathodenseitigen Zellpol (+) und einen Ringboden 113 mit dem anodenseitigen Zellpol (-) aufweist. Der mehrschichtige innere Aufbau 12 besteht auf Seiten der kathodenseitigen Elektroden (+) aus einer Vielzahl von Kathodenfolien 120 jeweils mit einer doppelseitigen Kathodenbeschichtung 121 und auf Seiten der anodenseitigen Elektroden (-) aus einer Vielzahl von Anodenfolien 122 jeweils mit einer doppelseitigen Anodenbeschichtung 123 sowie aus einem Separator 124 jeweils zwischen den Elektroden (+,-) und aus einer Isolierung 125 zwischen dem mehrschichtigen inneren Aufbau 12 und dem Behälter 11. Zwischen den beiden Röhrenzellen 1 ist ein Dichtungsring 204 vorgesehen, der das von einem Wärmeträgerfluid 20 durchströmte Rohrstück C der Röhrenzelle 1 gegenüber dem inneren Aufbau 12 abdichtet. Die Oberflächenvergrößerung der Röhrenzelle 1 weist, wie auch in Fig. 2 gezeigt, Aluminiumstrangpressprofile mit einer Vielzahl von Rippen 214 jeweils an der Außenschale 110 und an der Innenschale 111 des röhrenförmigen Behälters 11 auf.

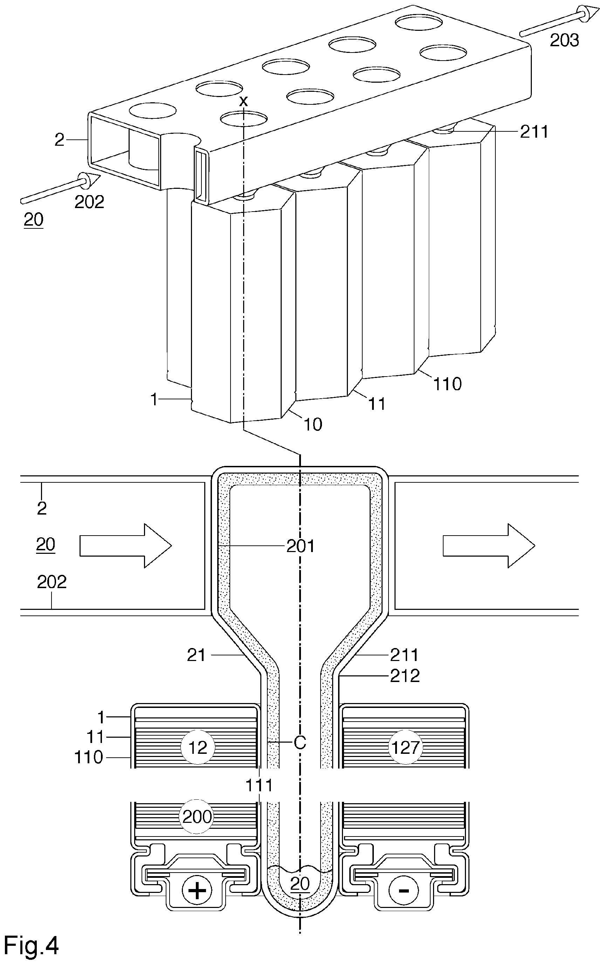

Fig. 4 zeigt den Ausschnitt eines Moduls 10, das aus einer Mehrzahl hexagonal ausgebildeter Röhrenzellen 1 jeweils mit einer trockenen Anbindung an die Kanalstruktur 2 aufgebaut ist. Wie in dem vertikalen Detailschnitt gezeigt, nimmt das Rohrstück C der Röhrenzelle 1 ein Wärmerohr 211 auf, das im Bereich der Wärmequelle 200 wärmeleitend mit der Innenschale 111 des röhrenförmigen Behälters 11 und im Bereich der Wärmesenke 201 wärmeleitend mit einer nicht näher bezeichneten Hülse im Vorlauf 202 der Kanalstruktur 2 verbunden ist und innerhalb der Kanalstruktur 2 von einem Wärmeträgerfluid 20 - z.B. von Wasser mit einem Frostschutzmittel - umströmt wird. Das Wärmerohr 211 ist als ein Thermosiphon 212 ausgebildet und weist eine innere kapillare Schicht für die Aufnahme eines phasenwechselnden Wärmeträgerfluids 20 - z.B. Alkohol oder Wasser - innerhalb des gegenüber der Atmosphäre vakuumdicht verschlossenen Wärmerohrs 211 auf. Der besondere Vorteil dieser Anordnung besteht in der räumlichen Entkoppelung der von dem mehrschichtigen, inneren Aufbau 12 gebildeten Wärmequelle 200 und der von der Kanalstruktur 2 gebildeten Wärmesenke 201, sodass eine räumliche Entkoppelung der wärmetechnischen Anbindung an die Kanalstruktur 2 und der elektrischen Kontaktierung der Zellpole (+,-) an den jeweils einander gegenüberliegenden Enden der Röhrenzelle 1 ermöglicht wird. Der mehrschichtige innere Aufbau 12 der Röhrenzelle 1 weist einen Stapel 127 auf, dessen Schichten jeweils senkrecht zu der Mittelachse x der Röhrenzelle 1 ausgerichtet sind.

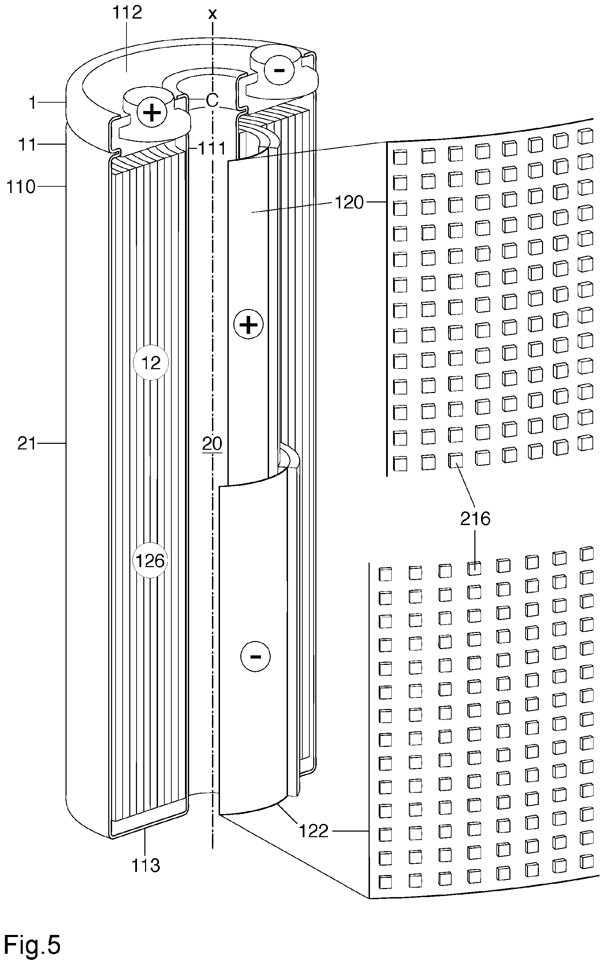

Fig. 5 zeigt eine Röhrenzelle 1, deren röhrenförmiger Behälter 11 als ein Hohlzylinder und deren mehrschichtiger innerer Aufbau 12 als ein Wickel 126 mit parallel zu der Mittelachse x ausgerichteten Schichten ausgebildet ist. Die Ausführungsform mit dem Wickel 126 ist nicht durch die beanspruchte Erfindung abgedeckt. Wie exemplarisch an jeweils einer Schicht der Elektroden (+,-) des mehrschichtigen inneren Aufbaus 12 gezeigt, weisen die Kathodenfolien 120 und die Anodenfolien 122 jeweils eine Mikrostruktur 216 auf, sodass die innere Oberfläche der Röhrenzelle 1 vergrößert wird, um die elektrische Kapazität der Röhrenzelle 1 zu erhöhen. Die mikrostrukturierte Oberfläche der Kathodenfolie 120, die z.B. eine Aluminiumfolie aufweist und der Anodenfolie 122, die z.B. eine Kupferfolie aufweist, kann, wie hier gezeigt, aus regelmäßig angeordneten Vor- und Rücksprüngen oder aus einer geätzten oder gesinterten Struktur der Kathoden- und der Anodenfolien 120, 122 bestehen. Die beiden Zellpole (+,-), an denen jeweils eine Vielzahl von Elektroden (+,-) des mehrschichtigen inneren Aufbaus 12 zusammengeführt werden, sind in einen Ringdeckel 112 aus Kunststoff eingelassen.

Die mikrostrukturierte Oberfläche der Kathodenfolie 120 und/oder der Anodenfolie 122 ist bevorzugt in allen Ausführungsbeispielen vorhanden, auch wenn dies nicht überall explizit in Vergrößerung dargestellt ist.

### Insbesondere die Mikrostrukturierung an der Anodenfolie 122 hat sich als vorteilhaft erwiesen

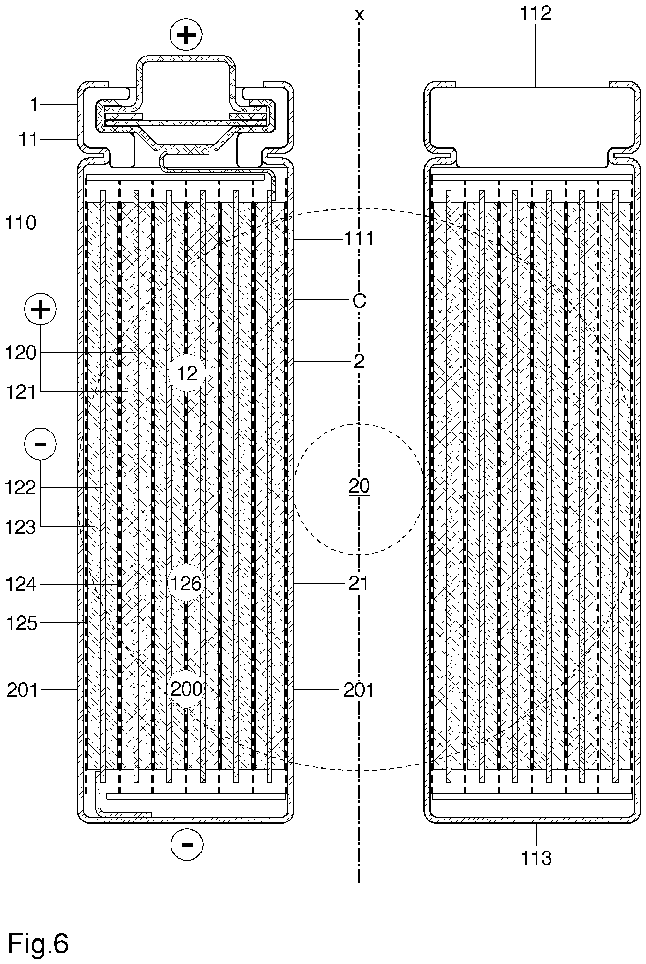

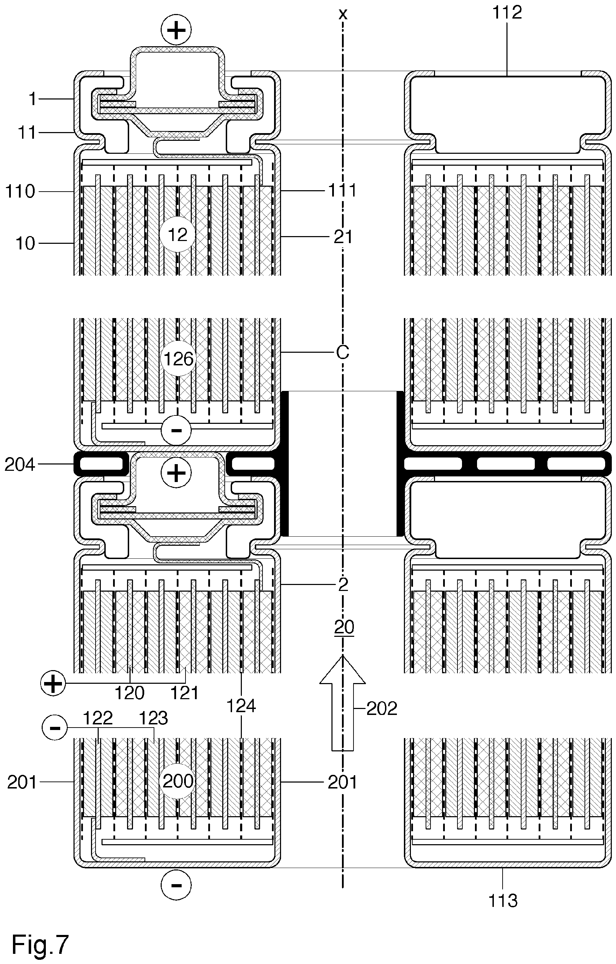

Fig. 6 zeigt eine Röhrenzelle 1 mit einem röhrenförmigen Behälter 11 als Hohlzylinder, deren innerer Aufbau 12 einen Wickel 126 aus einer Kathodenfolie 120 mit einer doppelseitigen Kathodenbeschichtung 121 und aus einer Anodenfolie 122 mit einer doppelseitigen Anodenbeschichtung 123 sowie aus einer Folie als Separator 124 zwischen den Elektroden (+,-) aufweist, wobei eine Isolierung 125 zwischen den Elektroden (+,-) und dem Behälter 11 vorgesehen ist. Der röhrenförmige Behälter 11 ist als ein Wärmeübertrager 21 ausgebildet und kann sowohl an seiner Außenschale 110 als auch an seiner Innenschale 111 Wärme auf ein Wärmeträgerfluid 20 übertragen. Die Innenschale 111 bildet ein von einem Wärmeträgerfluid 20 durchströmbares Rohrstück C einer Kanalstruktur 2. Die einzelnen Schichten des mehrschichtigen inneren Aufbaus 12 sind parallel zu der Mittelachse x angeordnet und weisen einen Wickel 126 auf. Die Außenschale 110, die Innenschale 111, und der Ringboden 113 des röhrenförmigen Behälters 11 bestehen aus vernickeltem Stahlblech, während der Ringdeckel 112 aus Kunststoff besteht und den kathodenseitigen Zellpol (+) sowie einen nicht näher dargestellten Druckausgleichsbehälter und einen Einfüllstutzen für ein Elektrolyt aufnimmt. Der anodenseitige Zellpol (-) wird von dem Ringboden 113 des röhrenförmigen Behälters 11 gebildet, sodass wie in Fig. 7 gezeigt die elektrische Kontaktierung einer Mehrzahl von Röhrenzellen 1 in Reihe erfolgen kann, um eine Kanalstruktur 2 zu bilden.

Fig. 7 zeigt die elektrische Kontaktierung von zwei Röhrenzellen 1, die in ihrem Aufbau dem im Fig. 6 gezeigten Ausführungsbeispiel entspricht. Ein Dichtungsring 204 ist jeweils zwischen dem kathodenseitigen Zellpol (+) und dem anodenseitigen Zellpol (-) der untereinander in Reihe verschalteten Röhrenzellen 1 vorgesehen und stellt eine dichte Verbindung zwischen den beiden jeweils von der Innenschale 111 des röhrenförmigen Behälters 11 gebildeten Rohrstücken C her, sodass aus einer Mehrzahl von Röhrenzellen 1 eine Kanalstruktur 2 für ein Wärmeträgerfluid 20 hergestellt werden kann.

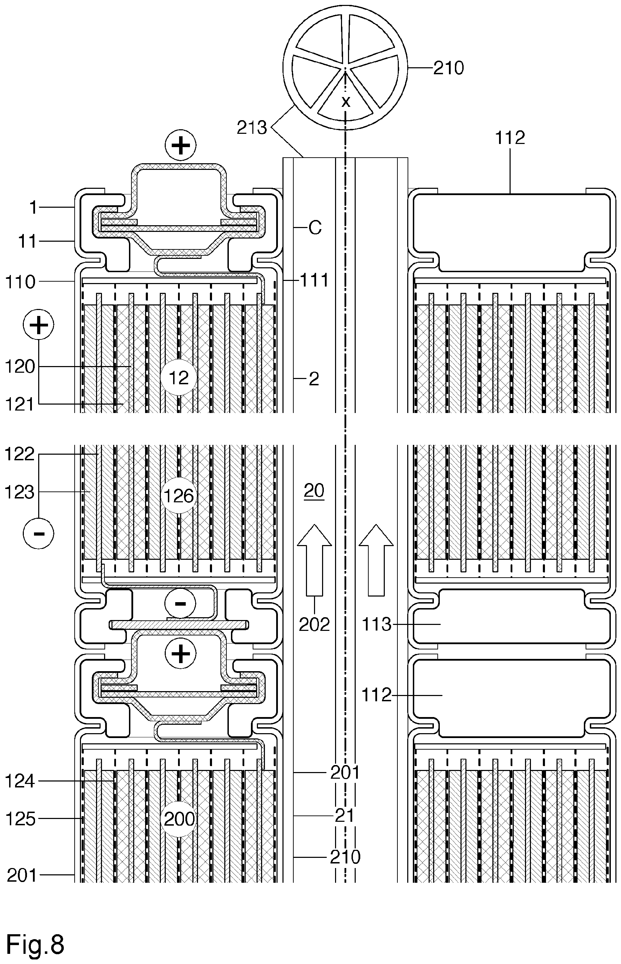

Fig. 8 zeigt eine Röhrenzelle 1 mit einem röhrenförmigen Behälter 11 als Hohlzylinder, deren mehrschichtiger innerer Aufbau 12 einen Wickel 126 aus einer Kathodenfolie 120 mit einer doppelseitigen Kathodenbeschichtung 121 und aus einer Anodenfolie 122 mit einer doppelseitigen Anodenbeschichtung 123 sowie aus einer Folie als Separator 124 jeweils zwischen den Elektroden (+,-) aufweist. Zwischen dem Behälter 11 und den Elektroden (+,-) des mehrschichtigen inneren Aufbaus 12 ist eine Isolierung 125 vorgesehen. Ein Ringdeckel 112 aus Kunststoff nimmt den kathodenseitige Zellpol (+) und ein Ringboden 113 aus Kunststoff nimmt den anodenseitigen Zellpol (-) auf, sodass die Röhrenzellen 1 untereinander in Reihe verschaltet werden können. Das von der Innenschale 111 gebildete Rohrstück C ist wärmeleitend mit einem Wärmeträgerrohr 210 verbunden, das als ein Sternrohr mit einem Mehrkammerprofil 213 ausgebildet ist. Das Mehrkammerprofil 213 bildet, wie hier gezeigt, den Vorlauf 202 für ein Wärmeträgerfluid 20, das z.B. aus Wasser mit einem Frostschutzmittel bestehen kann. Es kann aber auch den Vor- und den Rücklauf einer Kanalstruktur 2 aufnehmen. Von besonderem Vorteil ist die Möglichkeit mehrere Röhrenzellen 1 in Reihe auf ein durchgängiges Wärmeträgerrohr 210 aufzufädeln.

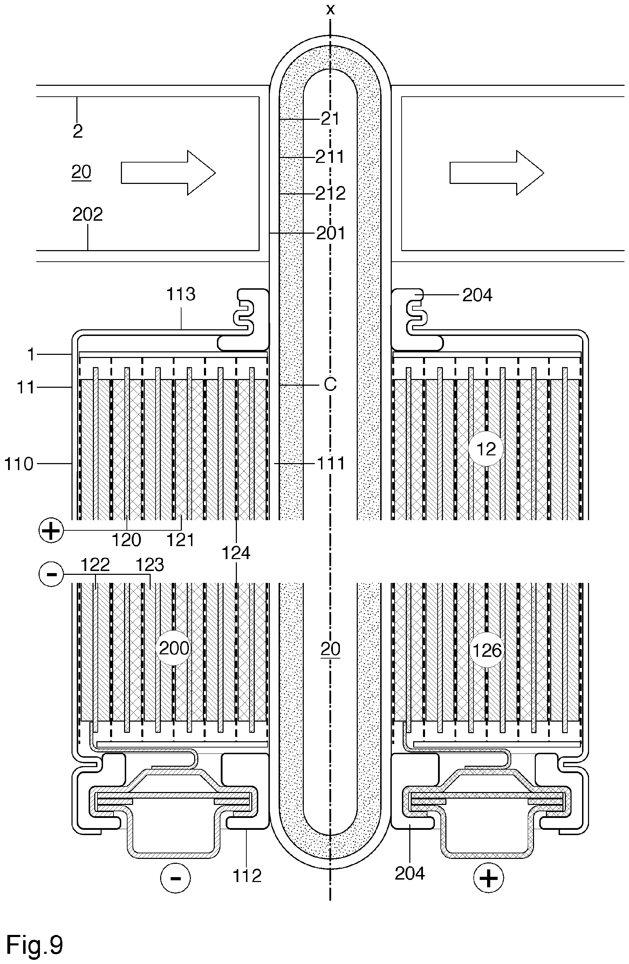

Fig. 9 zeigt eine Röhrenzelle 1, deren innerer Aufbau 12 dem in den Fig. 5-8 beschriebenen Aufbau entspricht. Bei diesem Ausführungsbeispiel der Erfindung wird die Innenschale 111 des röhrenförmigen Behälters 11 von einem Wärmerohr 211 gebildet, sodass die von dem mehrschichtigen inneren Aufbau 12 als Wärmequelle 200 ausgehende Wärme unmittelbar von einem phasenwechselnden Wärmeträgerfluid 20 des Wärmerohrs 211 zu der Wärmesenke 201 am oberen Ende des Wärmerohrs 211 transportiert werden kann. Das Wärmerohr 211 ermöglicht eine Entkoppelung von Wärmequelle 200 und Wärmesenke 201 sowie einen kontinuierlichen latenten Wärmetransport durch das phasenwechselnde Wärmeträgerfluid 20, solange ein Temperaturunterschied zwischen der Wärmequelle 200 und der von einem Wärmeträgerfluid 20 der Kanalstruktur 2 gebildeten Wärmesenke 201 besteht. Mit einer vertikalen oder geneigten Ausrichtung arbeitet das Wärmerohr 211 als Thermosiphon 212. Eine kapillare Struktur im Inneren des Wärmerohrs 211, wie hier gezeigt, ermöglicht aber auch einen horizontalen Wärmetransport. Besonders vorteilhaft ist die geometrische Entflechtung der thermischen Anbindung der Röhrenzelle 1 an die Kanalstruktur 2 an ihrem oberen Ende und die Möglichkeit der elektrischen Kontaktierung der Zellpole (+,-) einer Mehrzahl von Röhrenzellen 1 in einer Parallelschaltung jeweils an ihrem unteren Ende.

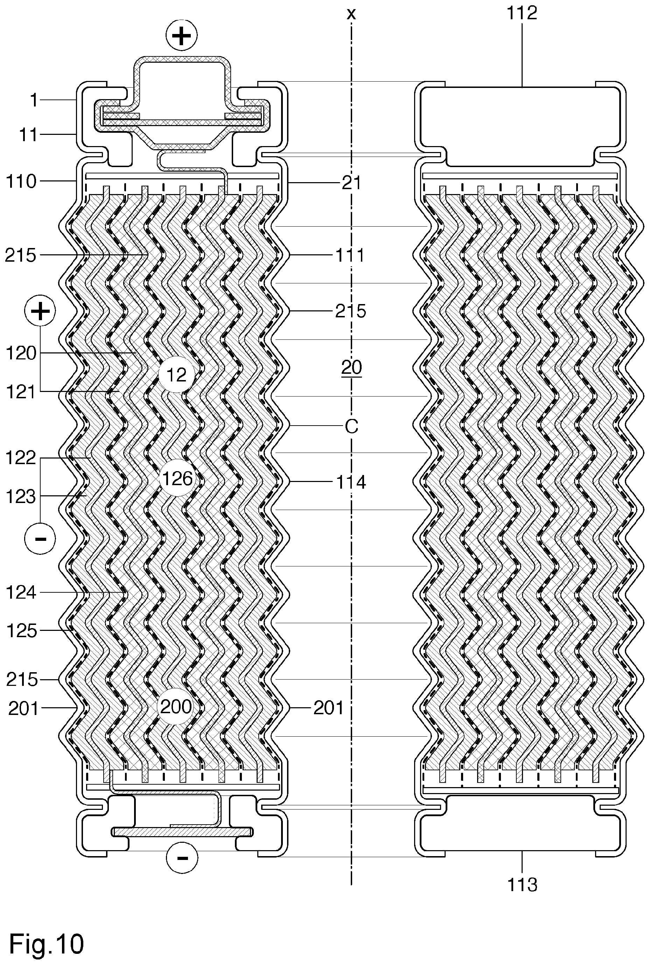

Fig. 10 zeigt den Vertikalschnitt einer Röhrenzelle 1, bei der sowohl der röhrenförmige Behälter 11 in Form eines Hohlzylinders als auch der mehrschichtige innere Aufbau 12 eine Oberflächenvergrößerung jeweils in Form von ringförmigen Sicken 215 aufweisen. Während die ringförmigen Sicken 215 an der Außenschale 210 und an der Innenschale 211 eine erhöhte Wärmetransportleistung des als Wärmeübertrager 21 ausgebildeten röhrenförmigen Behälters 11 bewirken, vergrößern die ringförmigen Sicken 215 die elektrische Kapazität der Röhrenzelle 1 mit einer um den Faktor 1,2-1,4 vergrößerten Oberfläche des inneren Aufbaus 12. Wenn in der Anmeldung von einer Vergrößerung bzw. Vermehrung durch bestimmte Oberflächenstrukturen gesprochen wird, bezieht sich der Faktor auf eine entsprechende Oberfläche ohne derartige Oberflächenstrukturen. Die ringförmigen Sicken 215 an der Kathodenfolie 120, an der Kathodenbeschichtung 121, an der Anodenfolie 122, an der Anodenbeschichtung 123 sowie an dem von einer Folie gebildeten Separator 124 werden jeweils in einem Rotationsverfahren auf einer Rolle hergestellt. Anschließend werden die einzelnen Schichten in einem Wickelverfahren auf die als Haspel 114 genutzte Innenschale 111 des röhrenförmigen Behälters 11 aufgewickelt, wobei die Schichten synchron untereinander verbunden werden, sodass der Wickel 126, geschützt durch eine umgebende Isolierung 125, mit der Außenschale 110 und mit dem Ringdeckel 112 sowie mit dem Ringboden 113 des röhrenförmigen Behälters 11 verbunden werden kann. Die beiden Zellpole (+,-) der Röhrenzelle 1 sind in den aus Kunststoff bestehenden Ringdeckel 112 und Ringboden 113 integriert, sodass eine Mehrzahl in Reihe verschalteter Röhrenzellen 1 eine Kanalstruktur 2 bildet.

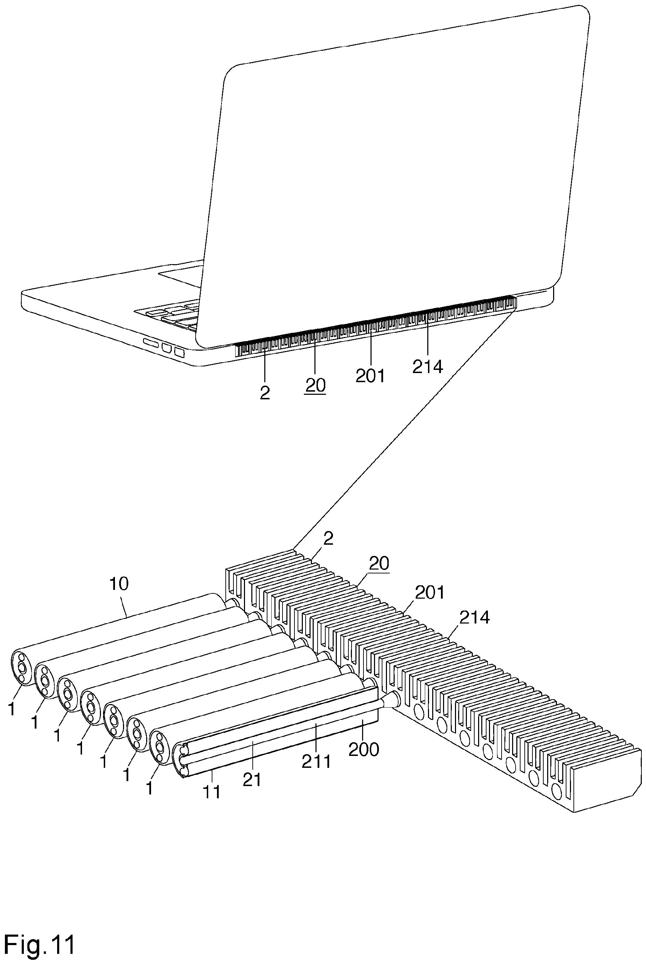

Fig. 11 zeigt den Einbau eines Moduls 10 mit einer Kanalstruktur 2 in ein Notebook. Während die Wärmequelle 200 eine Reihe von Röhrenzellen 1 aufweist, wird die Wärmesenke 201 des Moduls 10 von der aus einem berippten Profil bestehenden Kanalstruktur 2 gebildet. Der als Hohlzylinder ausgebildete Behälter 11 einer Röhrenzelle 1 nimmt ein zentrales Wärmerohr 211 auf, dessen als Wärmesenke 201 ausgebildetes Ende in eine Bohrung der berippten Kanalstruktur 2 eingesteckt wird.

Das berippte Profil weist eine Vielzahl luftdurchströmter Rippen 214 auf, die als Wärmesenke 201 wirken. Während des Schnellladens des Notebooks und während einer intensiven Beanspruchung des Prozessors kann ein ohnehin für die Kühlung des Prozessors in dem Notebook vorhandener Ventilator zugeschaltet werden, um eine Überhitzung des Moduls 10 zu verhindern.

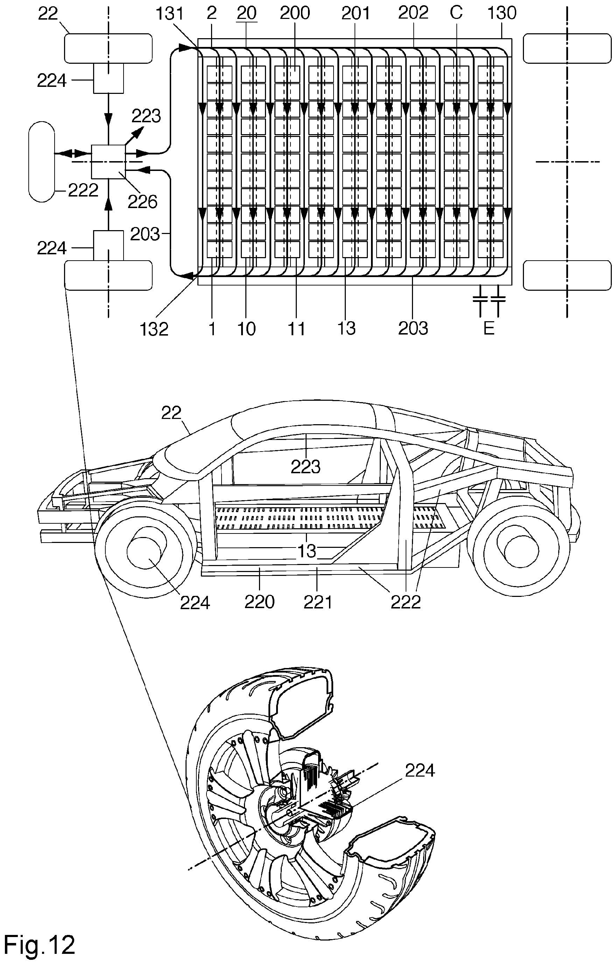

Fig. 12 zeigt ein Elektrofahrzeug 22 in einer perspektivischen Seitenansicht in der Blattmitte und eine Kanalstruktur 2 des Elektrofahrzeugs 22 in einem schematischen Grundriss oben sowie einen Kompressor 224 als Radnabenkompressor in einer Ausschnittperspektive am unteren Blattrand. In der perspektivischen Seitenansicht sind das Fahrgestell 220, die Batterie 13 und Druckluftspeicher 222, die in Längs- oder Querträger 221 des Fahrgestells 220 integriert sind, dargestellt. Die Batterie 13 hat ein Batteriegehäuse 130 mit einer Eingangsöffnung 131 für den Vorlauf 202 eines von Druckluft gebildeten Wärmeträgerfluids 20. Während des Fahrbetriebs des Elektrofahrzeugs 22 werden die Druckluftspeicher 222 des Fahrgestells 220 von den in die Radnaben integrierten Kompressoren 224 beladen, sodass die Kühlung der Batterie 13 durch Entspannung der Druckluft in der Kanalstruktur 2 erfolgen kann. Die Druckluft bespült die zu Modulen 10 gepackten Röhrenzellen 1 sowohl von innen als auch von außen. An der Ausgangsöffnung 132 verlässt die Druckluft in einem Rücklauf 203 das Batteriegehäuse 130 und wird gesteuert von einer Ventilinsel 226 entweder erneut in den Vorlauf 202 der Kanalstruktur 2 eingeleitet oder bedarfsweise für die thermische Konditionierung der Fahrgastzelle 223 genutzt. Die einzelnen Röhrenzellen 1 entsprechen in ihrem Aufbau dem in Fig. 2 und Fig. 3 erläuterten Ausführungsbeispiel.

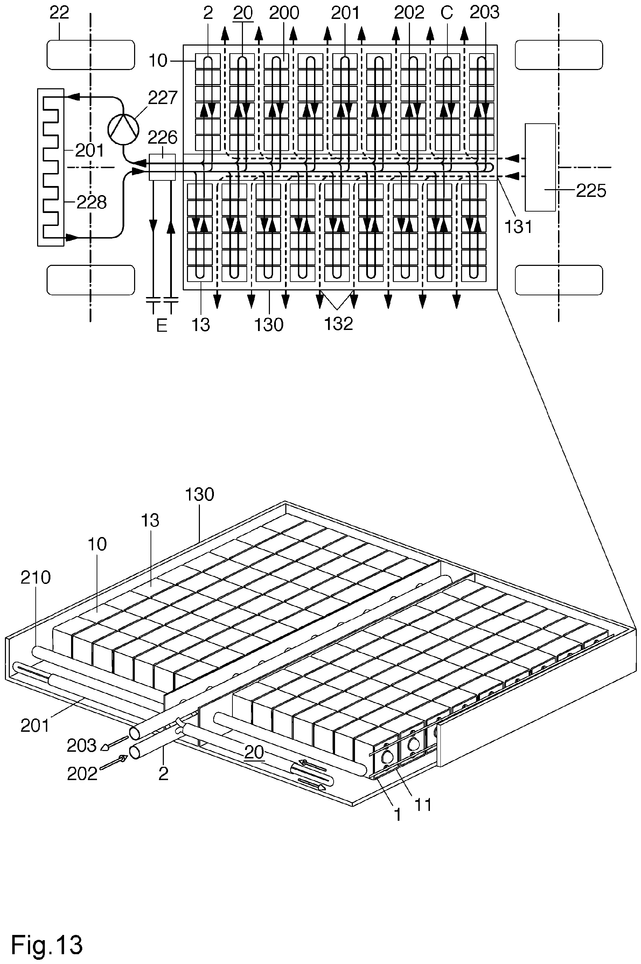

Fig. 13 zeigt die Kanalstruktur 2 eines Elektrofahrzeugs 22 in einem schematischen Grundriss oben und in einem isometrischen Ausschnitt der Batterie 13 unten. Die Kanalstruktur 2 zeigt ein Temperiersystem für die Batterie 13, das die einzelnen Module 10 der Batterie 13 in einem geschlossenen Kreislauf kühlt. Das Wärmeträgerfluid 20 besteht z.B. aus Wasser mit einem Frostschutzmittel und durchläuft, gesteuert von einer Ventilinsel 226 und angetrieben von einer Umwälzpumpe 227, eine von einem Kühler 228 gebildete Wärmesenke 201. Wie in dem isometrischen Ausschnitt gezeigt, weist das Wärmeträgerrohr 210 einen integrierten Vor- und Rücklauf 202,203 auf und ist dazu ausgebildet, jede einzelne Röhrenzelle 1 von innen zu temperieren. Ein zentraler Strang mit Vorlauf 202 und Rücklauf 203 bedient die den Modulen 10 zugeordneten Wärmeträgerrohre 210. Zusätzlich zu dieser in sich geschlossenen Kanalstruktur 2 für den von Wasser gebildeten Fluidkreislauf besitzt das Temperiersystem des Elektrofahrzeugs 22 eine Luftkühlung, bei der Luft in einer offenen Kanalstruktur 2 über ein Gebläse 225 an der Eingangsöffnung 131 in das Batteriegehäuse 31 eingeleitet und an Ausgangsöffnungen 132 jeweils zwischen den einzelnen Modulen 10 wieder ausgeleitet wird.

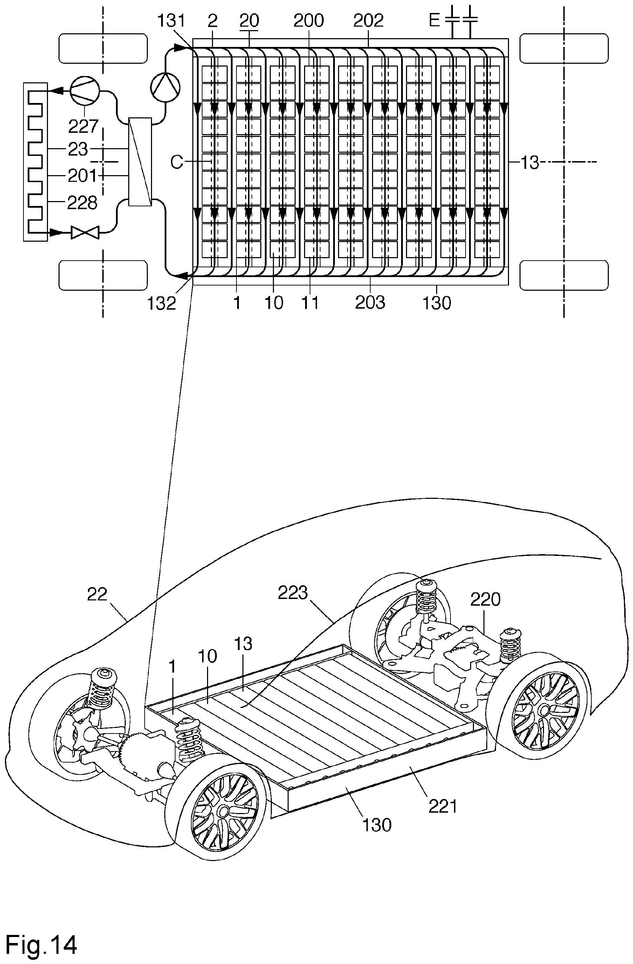

Fig. 14 zeigt die Kanalstruktur 2 eines Elektrofahrzeugs 22 in einem schematischen Grundriss oben und das Fahrgestell 220 des Elektrofahrzeugs 22 mit der Batterie 13 in einer isometrischen Darstellung unten. Die Kanalstruktur 2 ist für eine Direktanströmung der einzelnen Röhrenzellen 1 der Batterie 13 mit einem Thermoöl als Wärmeträgerfluid 20 ausgelegt, wobei eine Röhrenzelle 1 von dem Thermoöl jeweils sowohl an der Außenschale 110 als auch an Innenschale 111 des röhrenförmigen Behälters 11 angeströmt wird. In einem in sich geschlossenen Kreislauf wird das Thermoöl von der Batterie 13 als Wärmequelle 200 angetrieben, von einer Umwälzpumpe 227 zu einem luftgekühlten Kühler 228 als Wärmesenke 201 an der Fahrzeugfront geleitet, wobei der Rücklauf 203 einen separaten Kältekreis 23 mit einem Kühlmittel als zusätzliche Wärmesenke 201 aufweist. Auf diese Weise können die einzelnen Module 10 der Batterie 13, wie im Grundriss und in der Isometrie gezeigt, von dem Thermoöl sowohl von innen als auch von außen direkt angeströmt werden, sodass eine optimale Temperierung der Batterie 13 ermöglicht wird.

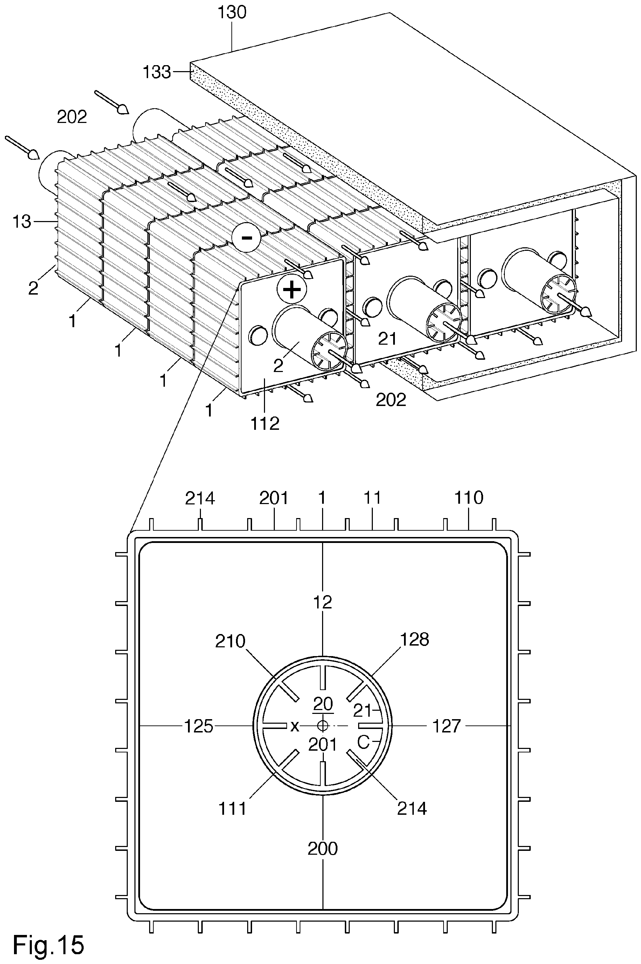

Fig. 15 zeigt einen isometrischen Ausschnitt mit einzelnen Röhrenzellen 1 der Batterie 13 eines in den Fig. 12-14 dargestellten Elektrofahrzeugs 22, die durch ein gemeinsames Wärmeträgerrohr 210 untereinander verbunden sind. Das Batteriegehäuse 130 ist zweischalig aufgebaut und hat eine Wärmedämmung 133 aus pyrogener Kieselsäure. Der Querschnitt der Röhrenzelle 1 zeigt den inneren Aufbau 12, wie in Fig. 2 und 3 gezeigt, als Stapel 127 aus einer Vielzahl von Folien, die jeweils senkrecht zu der Mittelachse x der Röhrenzelle 1 ausgerichtet sind. Die Außenschale 110 des röhrenförmigen Behälters 11 wird von einem Aluminiumstrangpressprofil mit einer Vielzahl von Rippen 214 gebildet, während die Innenschale 111 von einem Wärmeträgerrohr 210 in Form eines Sternrohrs gebildet wird, wobei die Röhrenzelle 1 als ein Wärmeübertrager 21 ausgebildet ist und die Außen- und die Innenschale 110, 111 jeweils als Wärmesenke 201 wirken und eine Kanalstruktur 2 für ein Wärmeträgerfluid 20 bilden. Eine von einer Folie gebildete Isolierung 125 trennt den inneren Aufbau 12 von dem röhrenförmigen Behälter 11 der Röhrenzelle 1.

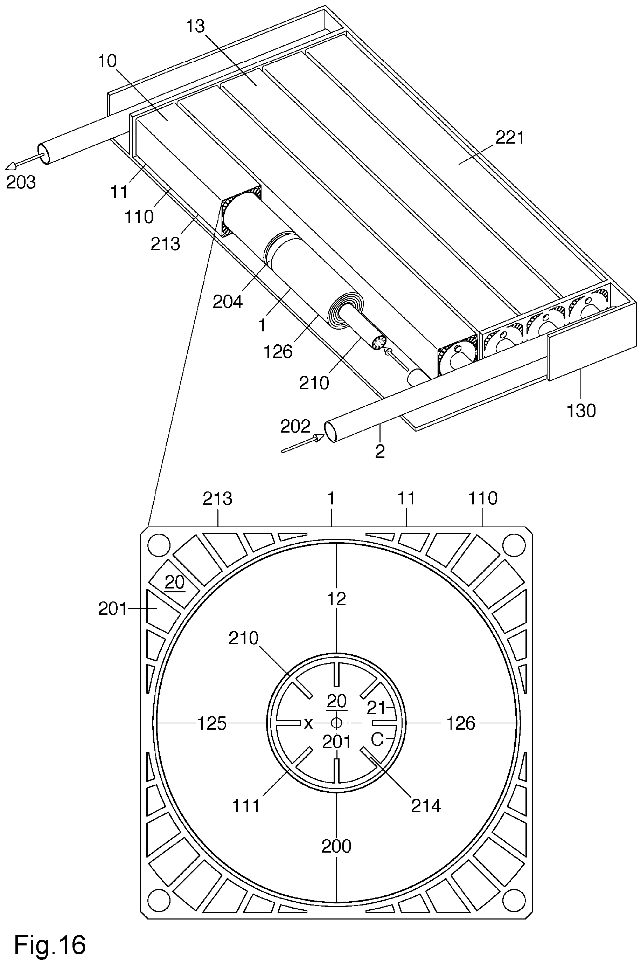

Fig. 16 zeigt einen isometrischen Ausschnitt der Traktionsbatterie 13 für eines der in den Fig. 12-14 dargestellten Elektrofahrzeuge 22. Die Röhrenzellen 1 sind jeweils als Mehrfach-Röhrenzellen 1 mit vier voneinander unabhängigen Wickeln 126 auf einem gemeinsamen Wärmeträgerrohr 210 aufgebaut, das die Innenschale 111 des röhrenförmigen Behälters 11 bildet. Die Außenschale 110 der Mehrfach-Röhrenzelle 1 besteht aus einem quadratischen Mehrkammerprofil 213, das als ein Querträger 221 über die gesamte Breite des Batteriegehäuses 130 spannt, sodass die modulare Reihung der Mehrkammerprofile 213 einen Boden und eine Decke des Batteriegehäuses 130 bilden, wobei jeweils eine Mehrfach-Röhrenzelle 1 ein Modul 10 der Batterie 13 bildet. Wie in dem Detailschnitt gezeigt, kann das Wärmeträgerrohr 210 als Haspel 114 genutzt werden, um die einzelnen durch Dichtungsringe 204 voneinander getrennten Wickel 126 aufzuwickeln. Der innere Aufbau 12 des Wickels 126 ist durch eine Isolierung 125 von der Außen- und der Innenschale 110, 111 getrennt. Die einzelnen Kammern des Mehrkammerprofils 213 können für den Vor- oder Rücklauf 202,203 eines Wärmeträgerfluids 20 genutzt werden. Zylindrische Kanäle in den Ecken des Mehrkammerprofils 213 dienen einer kraftschlüssigen Verschraubung mit den Längsträgern 221 des Batteriegehäuses 130, die jeweils den Vor- und Rücklauf 202,203 für das Wärmeträgerfluid 20 aufnehmen.

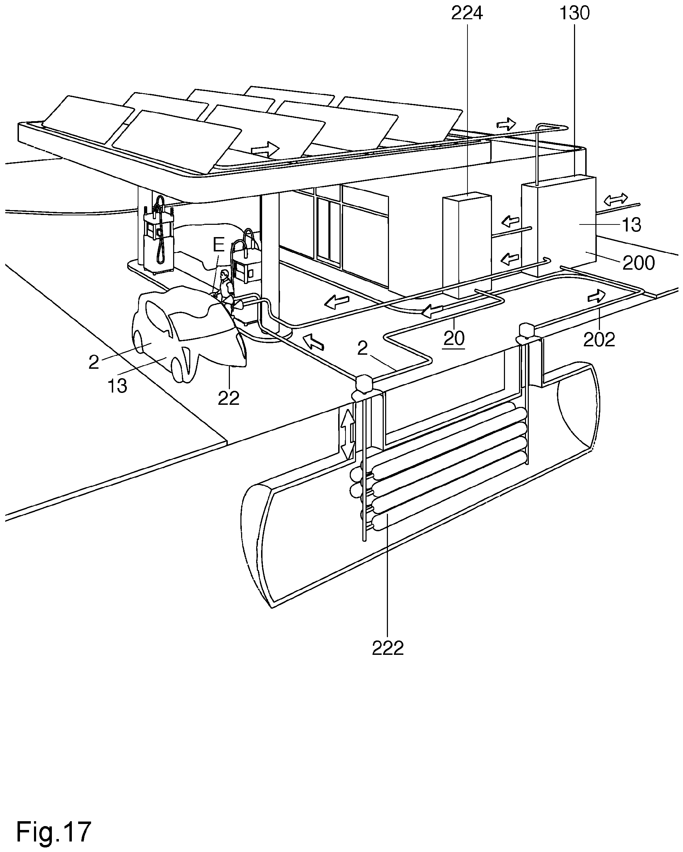

Fig. 17 zeigt ein Elektrofahrzeug 22, dessen Batterie 13 für den Ladebetrieb an einer Schnellladestation eine Anschlussvorrichtung E an eine externe Kanalstruktur 2 aufweist. Die Tankstelle hat einen Batteriespeicher, sowie ein pneumatisches Energiespeichersystem, das von einer Vielzahl von Druckluftspeichern 222 und einem stationären Kompressor 224 gebildet wird. Die Druckluftspeicher 222 sind in einem ehemaligen Kraftstofftank der Tankstelle eingebaut. Während des Schnellladevorgangs wird sowohl die Batterie 13 des Elektrofahrzeugs 22 als auch der tankstellenseitige Batteriespeicher durch Entspannung von Druckluft aus den stationären Druckluftspeichern 222 gekühlt.

Naturgemäß sind im Rahmen der Erfindung vielfältige Abwandlungen und Modifikationen möglich.

### Bezugszeichenübersicht

| | | | |
|---|---|---|---|
| Akkumulator-/Röhrenzelle | 1 | Kanalstruktur | 2 |
| Modul | 10 | Wärmeträgerfluid | 20 |
| Rohrstück | C | Anschlussvorrichtung | E |
| Mittelachse | x | Wärmequelle | 200 |
| Röhrenförmiger Behälter | 11 | Wärmesenke | 201 |
| Außenschale | 110 | Vorlauf | 202 |
| Innenschale | 111 | Rücklauf | 203 |
| Ringdeckel | 112 | Dichtungsring | 204 |
| Ringboden | 113 | Wärmeübertrager | 21 |
| Haspel | 114 | Wärmeträgerrohr | 210 |
| innerer Aufbau | 12 | Wärmerohr | 211 |
| Kathodenseitige Elektrode | (+) | Thermosiphon | 212 |
| Kathodenfolie | 120 | Mehrkammerprofil | 213 |
| Kathodenbeschichtung | 121 | Rippe | 214 |
| Anodenseitige Elektrode | (-) | Sicke | 215 |
| Anodenfolie | 122 | Mikrostruktur | 216 |
| Anodenbeschichtung | 123 | Elektrofahrzeug | 22 |
| Separatorfolie | 124 | Fahrgestell | 220 |
| Isolierung | 125 | Längs oder Querträger | 221 |
| Wickel | 126 | Druckluftspeicher | 222 |
| Stapel | 127 | Fahrgastzelle | 223 |
| Durchbruch | 128 | Kompressor | 224 |
| Batterie | 13 | Gebläse | 225 |
| Batteriegehäuse | 130 | Ventilinsel | 226 |
| Eingangsöffnung | 131 | Umwälzpumpe | 227 |
| Ausgangsöffnung | 132 | Kühler | 228 |
| Wärmedämmung | 133 | Kältekreis | 23 |

## Patentansprüche

1. Akkumulatorzelle,
welche als Röhrenzelle (1) zur Anbindung an eine Kanalstruktur (2) für die thermische Konditionierung eines Moduls (10) aus einer Mehrzahl von Akkumulatorzellen (1) und einer Batterie (13) aus einer Mehrzahl von Modulen (10) ausgebildet ist,
welche einen röhrenförmigen Behälter (11) mit einer Außenschale (110), einer Innenschale (111) und einer Mittelachse (x) aufweist, in welchem röhrenförmigen Behälter (11) ein mehrschichtiger innerer Aufbau (12) aus kathodenseitigen Elektroden (+) mit Kathodenfolien (120) und einer Kathodenbeschichtung (121) und aus anodenseitigen Elektroden (-) mit Anodenfolien (122) und einer Anodenbeschichtung (123) und aus einem ausschließlich für Metallionen durchlässigen Separator (124) zwischen den Elektroden (+,-) sowie aus einer Isolierung (125) zwischen den Elektroden (+,-) untereinander und zwischen den Elektroden (+,-) und dem röhrenförmigen Behälter (11) aufgenommen sind, welche ein von einem Wärmeträgerfluid (20) durchströmbares, koaxial zu der Mittelachse (x) angeordnetes Rohrstück (C) aufweist, welche Akkumulatorzelle (1) dazu vorgesehen ist, Wärme sowohl an ihrer Innenseite am Rohrstück (C) als auch an ihrer Außenseite am röhrenförmigen Behälter (11) auf ein Wärmeträgerfluid (20) oder umgekehrt zu übertragen, welcher mehrschichtige innere Aufbau (12) eine von einer Mikrostruktur gebildete Oberflächenvergrößerung aufweist, die von linienförmigen Strukturelementen oder von punktförmigen Strukturelementen an den Kathoden- oder an den Anodenfolien (120,121) gebildet ist und dazu ausgebildet ist, die elektrochemisch aktive Kontaktfläche zu der Kathodenbeschichtung (121) an der kathodenseitigen Elektrode(+) oder zu der Anodenbeschichtung (123) an der anodenseitigen Elektrode (-) zu erweitern, sodass das elektrochemische Fassungsvermögen der Akkumulatorzelle (1) vergrößert wird, welcher mehrschichtige innere Aufbau (12) einen Stapel (127) mit einem zentralen Durchbruch (128) aufweist, der aus einer Vielzahl planebener und senkrecht zu der Mittelachse (x) ausgerichteter Schichten aus Kathodenfolien (120) mit einer Kathodenbeschichtung (121) und aus Anodenfolien (122) mit einer Anodenbeschichtung (123) sowie aus einem Separator (124) zwischen den Elektroden (+,-) besteht, wobei die Akkumulatorzelle (1) dazu ausgebildet ist, eine Verbindung eines einzelnen oder mehrerer Stapel (127) mit einem Wärmeübertrager (21) derart zu ermöglichen, dass die Innenschale (111) des röhrenförmigen Behälters (11) von der Außenschale des Wärmeträgerrohrs (210) oder von der Außenschale des Wärmerohrs (211) gebildet wird und aus einem einzelnen Stapel (127) eine Einfach-Akkumulatorzelle (1) und aus einer Mehrzahl von Stapeln (127) eine Mehrfach-Akkumulatorzelle (1) hergestellt werden kann, wobei die Mehrfach-Akkumulatorzelle (1) ein röhrenförmiges Modul (10) für den Aufbau einer Batterie (13) bildet.

2. Akkumulatorzelle (1) nach Anspruch 1,
bei welcher der röhrenförmige Behälter einen ringförmigen Deckel (112) und einen ringförmigen Boden (113) umfasst.

3. Akkumulatorzelle (1) nach Anspruch 1 oder 2,
bei welcher die mikrostrukturierte Oberfläche der Kathodenfolie (120) oder der Anodenfolie (122) regelmäßig angeordnete Vor- und Rücksprünge oder eine geätzte oder gesinterte Struktur aufweist.

4. Akkumulatorzelle (1) nach einem der vorhergehenden Ansprüche,
deren röhrenförmige Behälter (11) entweder einen Hohlzylinder oder eine Röhre mit einem dreieckigen, quadratischen, hexagonalen oder rechteckigen Querschnitt aufweist und der Querschnitt des von dem Wärmeträgerfluid (20) durchströmten Rohrstücks (C) analog zu dem jeweiligen Querschnitt des Behälters (11) oder kreisrund ausgebildet ist und das Rohrstück (C) entweder von der Innenschale (111) des röhrenförmigen Behälters (11) oder von einem Wärmeträgerrohr (210) oder von einem Wärmerohr (211) gebildet wird, wobei das Wärmeträgerfluid (20) in dem mit einem Unterdruck beaufschlagbaren Wärmerohr (211) latent Wärme zwischen der von der Akkumulatorzelle (1) gebildeten Wärmequelle (201) und der von der Kanalstruktur (2) gebildeten Wärmesenke (200) überträgt und dabei regelmäßig seine Phase wechselt, sodass mit dem Wärmerohr (211) eine Entkoppelung von Wärmequelle (200) und Wärmesenke (201) mit einer trockenen Anbindung an die Kanalstruktur (2) ermöglicht wird.

5. Akkumulatorzelle (1) nach einem der vorhergehenden Ansprüche,
bei der der röhrenförmige Behälter (11) als ein einzelnes modulares Rohrstück (C) der Kanalstruktur (2) ausgebildet ist und mit einem Dichtungsring (204) gegenüber einem anschließenden Rohrstück (C) der Kanalstruktur (2) abdichtbar ist, sodass Wärme von dem inneren Aufbau (12) direkt auf das in dem Rohrstück (C) strömende Wärmeträgerfluid (20) übertragen werden kann, oder dass das Rohrstück (C) einen Wärmeübertrager (21) aufnimmt, der im Falle einer nassen Anbindung an die Kanalstruktur (2) von einem Wärmeträgerrohr (210) und im Falle einer trockenen Anbindung an die Kanalstruktur (2) von einem Wärmerohr (211) gebildet wird.

6. Akkumulatorzelle (1) nach einem der vorhergehenden Ansprüche,
bei der ein stranggepresstes Mehrkammerprofil (213) aus Aluminium die Außenschale (110) des röhrenförmigen Behälters (11) bildet und jeweils voneinander getrennte Hohlkammern aufweist, die entweder für den Vor- oder Rücklauf (202, 203) des Wärmeträgerfluids (20) oder für die Verschaltung der einzelnen Stapel (127) des inneren Aufbaus (12) der Akkumulatorzelle (1) oder für den Einbau einer Messtechnik für Temperatur und Spannung oder als Gewindekanäle für eine Verschraubung mit einem Batteriegehäuse (130) genutzt werden können, wobei das Mehrkammerprofil (213) als tragender Längs- oder Querträger (221) eines mit dem Batteriegehäuse (130) des Elektrofahrzeugs (22) verbundenen Fahrgestells (220) ausgebildet sein kann.

7. Akkumulatorzelle (1) nach einem der vorhergehenden Ansprüche,
bei welcher die Oberflächenvergrößerung im Falle von linienförmigen Strukturelementen als Rippen oder Rillen ausgebildet ist, und bei welcher die Oberflächenvergrößerung im Falle von punktförmigen Strukturelementen als Näpfchen oder Noppen ausgebildet ist.

8. Akkumulatorzelle (1) nach einem der vorhergehenden Ansprüche,
bei welcher die von einer Mikrostruktur gebildete Oberflächenvergrößerung sowohl an den Kathodenfolien als auch an den Anodenfolien (120, 121) ausgebildet ist.

9. Akkumulatorzelle (1) nach einem der vorhergehenden Ansprüche,
bei welcher die Oberflächenvergrößerung dazu ausgebildet ist, die elektrochemisch aktive Kontaktfläche zu der Kathodenbeschichtung (121) an der kathodenseitigen Elektrode(+) oder zu der Anodenbeschichtung (123) an der anodenseitigen Elektrode (-) mindestens um den Faktor 1,2 zu erweitern, bevorzugt höchstens um den Faktor 1,8 zu erweitern.

10. Elektrofahrzeug (22) mit einer Akkumulatorzelle (1) nach einem der vorhergehenden Ansprüche,
die für eine aus einer Mehrzahl von Akkumodulen (10) aufgebaute und innerhalb eines Batteriegehäuses (130) angeordnete Batterie (13) eines Elektrofahrzeugs (22) vorgesehen ist, bei welcher Batterie (13) das Wärmeträgerfluid (20) entweder Wasser mit einem Frostschutzmittel oder ein wärmeleitendes und elektrisch isolierendes Thermoöl jeweils als eine Flüssigkeit aufweist, oder dass das Wärmeträgerfluid (20) aus einem Inertgas, das in einer gegenüber der Atmosphäre in sich abgeschlossenen Kanalstruktur (2) geführt wird, oder aus Druckluft, die in einer gegenüber der Atmosphäre offenen Kanalstruktur (2) geführt wird besteht, wobei zwei voneinander getrennten Kanalstrukturen (2) jeweils für ein flüssiges und für ein gasförmiges Wärmeträgerfluid (20) für die thermische Konditionierung der Batterie (13) des Elektrofahrzeugs (22) vorgesehen sein können.

11. Elektrofahrzeug (22) nach Anspruch 10,
bei dem das Wärmeträgerfluid (20) aus einem wärmeleitenden und elektrisch isolierenden Thermoöl besteht, das innerhalb des Batteriegehäuses (130) eine Direktanströmung der in mehreren Akkumodulen (10) angeordneten Akkumulatorzellen (1) ermöglicht, sodass jede einzelne Akkumulatorzelle (1) sowohl an der Außenschale (110) als auch an der Innenschale (111) von dem Thermoöl direkt angeströmt werden kann, wobei die Kanäle (C) der Akkumulatorzelle (1) sowie ein Abstand der Akkumulatorzelle (1) und der Akkumodule (10) untereinander für den Vorlauf (202) des Wärmeträgerfluids (20) vorgesehen sind und die Kanalstruktur (2) eine mit einer Umwälzpumpe (227) verbundene Wärmesenke (201) aufweist, die im Rücklauf (203) des Wärmeträgerfluids (20) von einem mit der Frontpartie des Elektrofahrzeugs (22) verbundenen Kühler (228) oder von einem von der Kanalstruktur (2) getrennten Kältekreis (23) gebildet wird.

12. Elektrofahrzeug (22) nach Anspruch 10 oder 11,
bei dem das Wärmeträgerfluid (20) aus einem Inertgas besteht, das in einem in sich geschlossenen Kreislauf mittels einer Umwälzpumpe (227) über mindestens eine Eingangsöffnung (131) in das Batteriegehäuse (130) eingeleitet und durch mindestens eine Ausgangsöffnung (132) aus dem Batteriegehäuse (130) abgesaugt und an einer Wärmesenke (201) der Kanalstruktur (2) gekühlt wird, wobei die Wärmesenke (201) als ein fahrtwinddurchströmter Kühler (228) oder als ein separater Kältekreis (23) mit einem Kältemittel ausgebildet ist.

13. Elektrofahrzeug (22) nach einem der Ansprüche 10 bis 12,
bei dem das Wärmeträgerfluid (20) aus Druckluft besteht und die Kanalstruktur (2) Druckluftspeicher (222) aufweist, die im Bereich der Fahrgastzelle (223) in Längs- und Querträger (221) und in A-, B-, und C-Säulen eines Fahrgestells (220) integriert sind, wobei die Druckluft im Fahrbetrieb des Elektrofahrzeugs (22) an einer Eingangsöffnung (131) des Batteriegehäuses (130) entspannt wird, um mehrere Akkumodule (10) der Batterie (13) unter Nutzung des Joule-Thomson-Effekts zu kühlen und an einer Ausgangsöffnung (132) des Batteriegehäuses (130) von einem Gebläse (225) angesaugt und einem Mischluftsystem zugeführt wird, um die Fahrgastzelle (223) zu temperieren und das Elektrofahrzeug (22) mindestens einen mittels einer Ventilinsel (226) elektropneumatisch gesteuerten Kompressor (225) aufweist, der als ein Radnabenkompressor ausgebildet sein kann und als Energiekonverter dazu ausgebildet ist, im Fahrbetrieb Druckluft zu erzeugen, sodass die beim Bremsen gewonnene Energie als Druckluft in den Druckluftspeichern (222) des Fahrgestells (220) gespeichert werden kann.

14. Elektrofahrzeug (22) nach einem der Ansprüche 10 bis 13,
das eine lösbare Anschlussvorrichtung (E) für die Herstellung einer temporären Kraft-Wärme-Kälte-Kopplung zwischen der Kanalstruktur (2) des Elektrofahrzeugs (22) und einer externen Kanalstruktur (2) einer Schnellladestation aufweist, sodass das Elektrofahrzeug (22) im Schnellladebetrieb für die Übertragung von Wärme an eine externe Wärmequelle (200) oder Wärmesenke (201) angeschlossen werden kann, um sowohl die Batterie (13) des Elektrofahrzeugs (22) als auch eine stationäre Batterie (13) der Schnellladestation thermisch zu konditionieren, wobei die Anschlussvorrichtung (E) eine lösbare Klick-Rast-Verbindung für eine trockene oder eine nasse Anbindung an die externe Kanalstruktur (2) aufweist und mit einem Hochvolt-Elektroanschluss kombinierbar ist.

## Claims

1. An accumulator cell, which is formed as a tubular cell (1) for connecting to a channel structure (2) for thermal conditioning of a module (10) made up of a plurality of accumulator cells (1) and of a battery (13) made up of a plurality of modules (10), which has a tubular container (11) having an outer shell (110), an inner shell (111) and a center axis (x), which tubular container (11) accommodates a multilayer inner structure (12) made up of cathode-side electrodes (+) with cathode foils (120) and a cathode coating (121) and of anode-side electrodes (-) with anode foils (122) and an anode coating (123) and of a separator (124) exclusively permeable to metal ions between the electrodes (+,-) as well as of an insulation (125) between the electrodes (+,-) among themselves and between the electrodes (+,-) and the tubular container (11), which has a tubular piece (C) arranged coaxially to the central axis (x) through which a heat transfer fluid (20) can flow, which accumulator cell (1) is intended to transfer heat both on its inner side on the tubular piece (C) and on its outer side on the tubular container (11) to a heat transfer fluid (20) or vice versa, which multilayer inner structure (12) has a surface enlargement formed by a microstructure, which surface enlargement is formed by line-shaped structural elements or by point-shaped structural elements on the cathode foils or on the anode foils (120, 121) and is designed to expand the electrochemically active contact area to the cathode coating (121) on the cathode-side electrode (+) or to the anode coating (123) on the anode-side electrode (-), such that the electrochemical capacity of the accumulator cell (1) is increased, which multilayer inner structure (12) has a stack (127) with a central aperture (128) consisting of a plurality of planar layers of cathode foils (120) with a cathode coating (121) and of anode foils (122) with an anode coating (123) and of a separator (124) between the electrodes (+,-), said plurality of planar layers being aligned perpendicularly to the central axis (x), wherein the accumulator cell (1) is designed to enable a single or multiple stacks (127) to be connected to a heat exchanger (21) in such a way that the inner shell (111) of the tubular container (11) is formed by the outer shell of the heat transfer tube (210) or by the outer shell of the heat tube (211) and a single accumulator cell (1) can be produced from a single stack (127) and a multiple accumulator cell (1) can be produced from a plurality of stacks (127), wherein the multiple accumulator cell (1) forms a tubular module (10) for the assembly of a battery (13).

2. The accumulator cell (1) according to claim 1, wherein the tubular container comprises an annular lid (112) and an annular base (113).

3. The accumulator cell (1) according to claim 1 or 2, wherein the microstructured surface of the cathode foil (120) or the anode foil (122) has regularly arranged protrusions and recesses or an etched or sintered structure.

4. The accumulator cell (1) according to one of the preceding claims, whose tubular container (11) has either a hollow cylinder or a tube with a triangular, square, hexagonal or rectangular cross-section, the cross-section of the tubular piece (C) through which the heat transfer fluid (20) flows being formed analogous to the respective cross-section of the container (11) or circular, and the tubular piece (C) being formed either by the inner shell (111) of the tubular container (11) or by a heat transfer tube (210) or by a heat tube (211), wherein the heat transfer fluid (20) in the heat tube (211), which can be subjected to a negative pressure, latently transfers heat between the heat source (201) formed by the accumulator cell (1) and the heat sink (200) formed by the channel structure (2) while changing its phase regularly, such that the heat tube (211) enables a decoupling of the heat source (200) and the heat sink (201) with a dry connection to the channel structure (2).

5. The accumulator cell (1) according to one of the preceding claims, wherein the tubular container (11) is formed as a single modular tubular piece (C) of the channel structure (2) and is sealable with a sealing ring (204) against an adjoining tubular piece (C) of the channel structure (2), such that heat can be transferred from the inner assembly (12) directly to the heat transfer fluid (20) flowing in the tubular piece (C), or that the tubular piece (C) accommodates a heat exchanger (21) which is formed by a heat transfer tube (210) in the case of a wet connection to the channel structure (2) and by a heat tube (211) in the case of a dry connection to the channel structure (2).

6. The accumulator cell (1) according to one of the preceding claims, in which an extruded multi-chamber profile (213) made of aluminum forms the outer shell (110) of the tubular container (11) and has hollow chambers which respectively are separated from one another and can be used either for the supply or return flow (202, 203) of the heat transfer fluid (20) or for the interconnection of the individual stacks (127) of the inner assembly (12) of the accumulator cell (1) or for the installation of a measuring system for temperature and voltage or as threaded channels for a screw connection to a battery housing (130), wherein the multi-chamber profile (213) can be designed as a supporting longitudinal or transverse support (221) of a chassis (220) connected to the battery housing (130) of the electric vehicle (22).

7. The accumulator cell (1) according to one of the preceding claims, wherein the surface enlargement in the case of line-shaped structural elements is formed as ribs or grooves, and wherein the surface enlargement in the case of point-shaped structural elements is formed as cups or nubs.

8. The accumulator cell (1) according to one of the preceding claims, wherein the surface enlargement formed by a microstructure is formed on both the cathode foils and the anode foils (120, 121).

9. The accumulator cell (1) according to one of the preceding claims, in which the surface enlargement is designed to expand the electrochemically active contact area to the cathode coating (121) at the cathode-side electrode (+) or to the anode coating (123) at the anode-side electrode (-) by at least a factor of 1.2, preferably by at most a factor of 1.8.

10. An electric vehicle (22) with an accumulator cell (1) according to one of the preceding claims, which is provided for a battery (13) of an electric vehicle (22), which battery (13) is composed of a plurality of accumulator modules (10) and is arranged within a battery housing (130), in which battery (13) the heat transfer fluid (20) respectively has either water with an antifreeze agent or a thermally conductive and electrically insulating thermal oil as a liquid, or the heat transfer fluid (20) consists of an inert gas, which is conducted in a channel structure (2) which is closed off in relation to the atmosphere, or of compressed air, which is conducted in a channel structure (2) which is open in relation to the atmosphere, wherein two channel structures (2) which are separate from one another can be provided for a liquid and for a gaseous heat transfer fluid (20) respectively for the thermal conditioning of the battery (13) of the electric vehicle (22).

11. The electric vehicle (22) according to claim 10, in which the heat transfer fluid (20) consists of a thermally conductive and electrically insulating thermal oil which, within the battery housing (130), allows a direct flow to the accumulator cells (1) arranged in a plurality of accumulator modules (10), such that the thermal oil can flow directly to each individual accumulator cell (1) both on the outer shell (110) and on the inner shell (111), wherein the channels (C) of the accumulator cell (1) as well as a distance of the accumulator cell (1) and between the accumulator modules (10) are provided for the supply flow (202) of the heat transfer fluid (20), and the channel structure (2) has a heat sink (201) connected to a circulating pump (227) which heat sink is formed in the return (203) of the heat transfer fluid (20) by a radiator (228) connected to the front part of the electric vehicle (22) or by a cooling circuit (23) separated from the channel structure (2).

12. The electric vehicle (22) according to claim 10 or 11, in which the heat transfer fluid (20) consists of an inert gas which is introduced into the battery housing (130) in a closed circuit by means of a circulation pump (227) via at least one inlet opening (131) and is sucked out of the battery housing (130) through at least one outlet opening (132) and cooled at a heat sink (201) of the channel structure (2), wherein the heat sink (201) is designed as a cooler (228) through which the head wind passes or as a separate cooling circuit (23) with a refrigerant.

13. The electric vehicle (22) according to one of claims 10 to 12, in which the heat transfer fluid (20) consists of compressed air and the channel structure (2) has compressed air accumulators (222) which are integrated in the region of the passenger cell (223) in longitudinal and transverse beams (221) and in A, B and C pillars of a chassis (220), wherein the compressed air is bled at an inlet opening (131) of the battery housing (130) during driving operation of the electric vehicle (22), in order to cool a plurality of battery modules (10) of the battery (13) using the Joule-Thomson effect, and is sucked in at an output opening (132) of the battery housing (130) by a fan (225) and supplied to a mixed air system, in order to temper the passenger compartment (223), and the electric vehicle (22) has at least one compressor (225) which is electropneumatically controlled by means of a valve terminal (226), which can be designed as a wheel hub compressor and which, as an energy converter, is designed for generating compressed air during driving operation, such that the energy obtained during braking can be stored as compressed air in the compressed air accumulators (222) of the chassis (220).

14. The electric vehicle (22) according to one of claims 10 to 13, having a releasable connection device (E) for establishing a temporary power-heat-cold coupling between the channel structure (2) of the electric vehicle (22) and an external channel structure (2) of a fast charging station, such that the electric vehicle (22) can be connected to an external heat source (200) or heat sink (201) for the transfer of heat during fast charging operation, to thermally condition both the battery (13) of the electric vehicle (22) and a stationary battery (13) of the fast charging station, wherein the connection device (E) has a releasable click-lock connection for a dry or a wet connection to the external channel structure (2) and is combinable with a high-voltage electric connection.

## Revendications

1. Cellule d'accumulateur,
conçue en tant que cellule cylindrique (1) pour être raccordée à une structure de canal (2) aux fins du conditionnement thermique d'un module (10) constitué d'une pluralité de cellules d'accumulateur (1) et d'une batterie (13) constituée d'une pluralité de modules (10),
présentant un réceptacle cylindrique (11) comportant une coque externe (110), une coque interne (111) et un axe médian (x), le réceptacle cylindrique (11) étant destiné à recevoir une structure interne (12) multicouche, constituée d'électrodes côté cathode (+) comportant des feuilles cathodiques (120) et une protection cathodique (121), d'électrodes côté anode (-) comportant des feuilles anodiques (122) et une protection anodique (123), d'une séparation (124) entre les électrodes (+, -), perméable uniquement aux ions métalliques, et d'une isolation (125) entre les électrodes (+, -), et entre les électrodes (+, -) et le réceptacle cylindrique (11),
ladite cellule d'accumulateur présentant un élément tubulaire (C) disposé de façon coaxiale par rapport à l'axe médian (x) et permettant l'écoulement d'un fluide caloporteur (20), la cellule d'accumulateur (1) étant destinée à transmettre de la chaleur à un fluide caloporteur (20) à la fois sur son côté intérieur au niveau de l'élément tubulaire (C) et sur son côté extérieur au niveau du réceptacle cylindrique (11) ou vice versa,
la structure interne (12) multicouche présentant un agrandissement de surface formé par une microstructure, qui est formé par des éléments structurels linéaires ou des éléments structurels ponctuels au niveau des feuilles cathodiques ou anodiques (120, 121) et destiné à agrandir la surface de contact électrochimique active pour la protection cathodique (121) de l'électrode côté cathode (+) ou pour la protection anodique (123) de l'électrode côté anode (-), de manière à faire augmenter la capacité nominale électrochimique de la cellule d'accumulateur (1), la structure interne (12) multicouche présentant une pile (127) comportant une percée (128) centrale et étant composée d'une pluralité de couches planes de feuilles cathodiques (120) avec une protection cathodique (121) et de feuilles anodiques (122) avec une protection anodique (123), disposées perpendiculairement à l'axe médian (x), et d'une séparation (124) entre les électrodes (+, -),
ladite cellule d'accumulateur (1) étant conçue pour permettre une liaison d'une seule ou de plusieurs piles (127) avec un échangeur de chaleur (21) de telle sorte que la coque interne (111) du réceptacle cylindrique (11) soit formée par la coque externe du tube d'échangeur thermique (210) ou par la coque externe du tube thermique (211) et qu'il soit possible de fabriquer une cellule d'accumulateur (1) unique à partir d'une seule pile (127) et une cellule d'accumulateur (1) multiple à partir d'une pluralité de piles (127), la cellule d'accumulateur (1) multiple formant une module (10) cylindrique pour l'agencement d'une batterie (13).

2. Cellule d'accumulateur (1) selon la revendication 1,
le réceptacle cylindrique comprenant un couvercle annulaire (112) et une base annulaire (113).

3. Cellule d'accumulateur (1) selon la revendication 1 ou 2,
la surface micro-structurée de la feuille cathodique (120) ou de la feuille anodique (122) présentant des saillies et des évidements régulièrement disposés ou une structure gravée ou frittée.

4. Cellule d'accumulateur (1) selon l'une des revendications précédentes,
dont le réceptacle cylindrique (11) présente un cylindre creux ou un tube de section triangulaire, carrée, hexagonale ou rectangulaire, la section de l'élément tubulaire (C) permettant l'écoulement d'un fluide caloporteur (20) étant réalisée de façon analogue à la section correspondante du réceptacle (11) ou de façon circulaire, et l'élément tubulaire (C) étant formé par la coque interne (111) du réceptacle cylindrique (11) ou par un tube d'échangeur thermique (210) ou par un tube thermique (211), le fluide caloporteur (20) s'écoulant dans le tube thermique (211) pouvant être sollicité par une pression négative transférant de manière latente de la chaleur entre la source thermique (201) formée par la cellule d'accumulateur (1) et le dissipateur thermique (200) formé par la structure de canal (2), tout en changeant régulièrement de phase, ce qui rend possible, à l'aide du tube thermique (211), un découplage de la source thermique (200) et du dissipateur thermique (201) avec un raccordement sec à la structure de canal (2).

5. Cellule d'accumulateur (1) selon l'une des revendications précédentes,
le réceptacle cylindrique (11) étant conçu sous la forme d'un élément tubulaire (C) modulaire unique de la structure de canal (2) et pouvant être étanché à l'aide d'une bague d'étanchéité (204) par rapport à un élément tubulaire (C) suivant de la structure de canal (2), de sorte que la chaleur peut être transférée de la structure interne (12) directement au fluide caloporteur (20) s'écoulant dans l'élément tubulaire (C), ou que l'élément tubulaire (C) reçoit un échangeur de chaleur (21) formé par un tube d'échangeur thermique (210) en cas de raccordement humide à la structure de canal (2) et par un tube thermique (211) en cas de raccordement sec à la structure de canal (2).

6. Cellule d'accumulateur (1) selon l'une des revendications précédentes,
un profilé à chambres multiples (213) extrudé en aluminium formant la coque externe (110) du réceptacle cylindrique (11) et présentant des chambres creuses séparées l'une de l'autre, pouvant être utilisées pour l'écoulement avant et arrière (202, 203) du fluide caloporteur (20) ou pour la connexion des piles (127) isolées de la structure interne (12) de la cellule d'accumulateur (1) ou bien pour l'installation d'une technique de mesurage de la température ou de la tension ou encore en tant que canaux filetés pour un raccord vissé avec un boîtier de batterie (130), ledit profilé à chambres multiples (213) pouvant être réalisé sous la forme de support longitudinal ou transversal (221) d'un châssis de véhicule (220) relié avec le boîtier de batterie (130) du véhicule électrique (22).

7. Cellule d'accumulateur (1) selon l'une des revendications précédentes, l'agrandissement de surface étant réalisé sous la forme de nervures ou de rainures lorsqu'il s'agit des éléments structurels linéaires, et l'agrandissement de surface étant réalisé sous la forme d'inserts ou de protubérances lorsqu'il s'agit des éléments structurels ponctuels.

8. Cellule d'accumulateur (1) selon l'une des revendications précédentes, l'agrandissement de surface formé par une microstructure étant réalisé à la fois au niveau des feuilles cathodiques et anodiques (120, 121).

9. Cellule d'accumulateur (1) selon l'une des revendications précédentes, l'agrandissement de surface étant réalisé pour agrandir la surface de contact électrochimique active pour la protection cathodique (121) de l'électrode côté cathode (+) ou pour la protection anodique (123) de l'électrode côté anode (-), la multipliant au moins par 1,2, de préférence par 1,8 au maximum.

10. Véhicule électrique (22) doté d'une cellule d'accumulateur (1) selon l'une des revendications précédentes, prévue pour une batterie (13) d'un véhicule électrique (22), composée d'une pluralité de modules d'accumulateur (10) et disposée à l'intérieur d'un boîtier de batterie (130), le fluide caloporteur (20) de la batterie (13) contenant soit de l'eau avec un antigel, soit une huile thermique conductrice de la chaleur et électriquement isolante, sous forme liquide respectivement, ou bien le fluide caloporteur (20) se composant d'un gaz inerte amené dans une structure de canal (2) fermée par rapport à l'atmosphère ou d'air comprimé amené dans une structure de canal (2) ouverte par rapport à l'atmosphère, deux structures de canaux (2) séparées pouvant être prévues respectivement pour un fluide caloporteur (20) liquide et gazeux pour le conditionnement thermique de la batterie (13) du véhicule électrique (22).

11. Véhicule électrique (22) selon la revendication 10,
le fluide caloporteur (20) étant constitué d'une huile thermique conductrice de la chaleur et électriquement isolante qui, à l'intérieur du boîtier de batterie (130), permet un écoulement direct vers les cellules d'accumulateur (1) disposées en plusieurs modules d'accumulateur (10), de sorte que l'huile thermique peut s'écouler directement sur la coque externe (110) et sur la coque interne (111) de chaque cellule d'accumulateur (1) isolée, les canaux (C) de la cellule d'accumulateur (1) et une distance entre la cellule d'accumulateur (1) et les modules d'accumulateur (10) étant prévus pour l'écoulement (202) du fluide caloporteur (20) et la structure de canal (2) présentant un dissipateur thermique (201) relié avec une pompe de circulation (227), qui est formé, dans l'écoulement arrière (203) du fluide caloporteur (20), par un refroidisseur (228) relié avec la partie frontale du véhicule électrique (22) ou par un circuit de refroidissement (23) séparé de la structure de canal (2).

12. Véhicule électrique (22) selon la revendication 10 ou 11,
dans lequel le fluide caloporteur (20) est constitué d'un gaz inerte, introduit dans le boîtier de batterie (130) en circuit fermé au moyen d'une pompe de circulation (227) via au moins une ouverture d'entrée (131) et aspiré hors du boîtier de batterie (130) à travers au moins une ouverture de sortie (132) et refroidi au niveau d'un dissipateur thermique (201) de la structure de canal (2), le dissipateur thermique (201) étant réalisé en tant que refroidisseur (228) traversé par le vent de circulation ou en tant que circuit de refroidissement (23) comportant un réfrigérant.

13. Véhicule électrique (22) selon l'une des revendications 10 à 12, dans lequel le fluide caloporteur (20) est constitué d'air comprimé et la structure de canal (2) présente des réservoirs d'air comprimé (222) qui sont intégrés au niveau de l'habitacle (223) aux supports longitudinaux et transversaux (221) et aux piliers A, B et C d'un châssis de véhicule (220), l'air comprimé étant libéré pendant le fonctionnement du véhicule électrique (22) au niveau d'une ouverture d'entrée (131) du boîtier de batterie (130) afin de refroidir plusieurs modules d'accumulateur (10) de la batterie (13) par effet Joule-Thomson et aspiré au niveau d'une ouverture de sortie (132) du boîtier de batterie (130) par un ventilateur (225) et amené dans un système d'air mélangé afin de contrôler la température de l'habitacle (223), et le véhicule électrique (22) présentant au moins un compresseur (225) commandé de façon électropneumatique par un îlot de distributeurs (226) et pouvant être réalisé sous la forme d'un compresseur de moyeu de roue et conçu en tant que convertisseur d'énergie pour générer de l'air comprimé pendant le fonctionnement du véhicule, de sorte que l'énergie produite lors du freinage peut être stockée sous la forme d'air comprimé dans les réservoirs d'air comprimé (222) du châssis de véhicule (220).

14. Véhicule électrique (22) selon l'une des revendications 10 à 13, présentant un dispositif de connexion (E) amovible pour la réalisation d'un couplage temporaire puissance-chaleur-froid entre la structure de canal (2) du véhicule électrique (22) et une structure de canal (2) externe d'une station de charge rapide, de sorte que le véhicule électrique (22) peut être connecté en mode de charge rapide à une source thermique (200) externe ou à un dissipateur thermique (201) pour le transfert de chaleur, afin de conditionner thermiquement à la fois la batterie (13) du véhicule électrique (22) et une batterie (13) fixe de la station de charge rapide, le dispositif de connexion (E) présentant un raccord à enclenchement amovible pour un raccordement sec ou humide à la structure de canal (2) externe et étant combinable avec un raccordement électrique haute tension.
